# EUROPEAN PATENT APPLICATION

(11) **EP 1 198 153 A1**
(43) Date of publication of application: **17.04.2002**
(21) Application number: 01932205.6
(22) Date of filing: 22.05.2001
(51) Int. Cl.: H04Q 9/00, H04L 12/28, H04N 5/00, G06F 13/00

(54) **DATA TRANSMISSION METHOD, DATA TRANSMISSION SYSTEM, AND DATA TRANSMISSION DEVICE**

(30) Priority: 22.05.2000 JP 2000150546
(71) Applicant: Sony Corporation, Tokyo 141-0001 (JP)
(72) Inventor: KAWAMURA, Harumi, Sony Corporation, Tokyo 141-0001 (JP)
(74) Representative: Robinson, Nigel Alexander Julian
(86) International application number: JP0104285
(87) International publication number: WO0191505

(57) **Abstract**

In order to be able to carry out remote control of another appliance easily and favorably using a transmission network such as Bluetooth. In case of transmitting a command of a predetermined format between one appliance and another appliance capable of transmitting data bidirectionally over a predetermined radio transmission network, when the one appliance transmits a first command for instructing a function block which is an object for control to the other appliance, a function block which is an object for control by the second command transmitted from the one appliance is determined to be a function block specified by the first command. Further, if setting of the function block which is the object for control by the first command exists on the other appliance, the one appliance can be recognized by a response to a predetermined command from the one appliance.

## Description

### TECHNICAL FIELD

The present invention relates to a data transmission system preferable for application to, for example, a short-distance wireless communication system, a data transmission system employing this data transmission method and a data transmitting apparatus used in this system, and more particularly to technology preferable for processing for carrying out wireless communication between audio devices, video devices or devices controlling these audio or video devices.

### BACKGROUND ART

In recent years, wireless communication system based on a standard called Bluetooth (Bluetooth: trade mark) has been proposed and prevailing in actual fields. According to this wireless communication system, telephone communication audio data, facsimile image data, computer data and the like are transmitted among plural devices using a frequency band of 2.4 GHz.

This is a short-distance wireless communication system in which a relatively short-distance network is assumed while its wireless communication distance among devices is from some m to about 100 m max. This short-distance wireless communication system accommodates profiles which specify how the data transmission is carried out for each data type to be transmitted. The detail of the communication system will be described in the best mode for carrying out the invention and has been already publicized in Bluetooth SIG, which is a standardization organization.

If the remote control of an audio device or a video device in the wireless network based on the standard of the Bluetooth already proposed is assumed, a control state is often confused due to the existence of a plurality of control paths for some device.

Specifically, if a plurality of disc reproducing sections are included in an audio device, for example, and a command to instruct a reproducing operation is simply transmitted from a remote controller, a receiving end cannot determine which of the disc reproducing sections starts reproducing.

Conventionally, therefore, if a command to instruct a certain operation is to be transmitted, it is necessary to always instruct to which functional block in a device the command corresponds, disadvantageously complicating command structure.

Although an example of bluetooth has been described here, the same problem exists in case of constructing a similar wireless communication network.

### DISCLOSURE OF THE INVENTION

An object of the present invention is to conduct good remote control of the other device or the like using various types of communication networks.

According to a first aspect, there is provided a data transmission method for transmitting a command of a specified type between one device and the other device capable of bidirectionally transmitting data in a specified transmission network wherein if the one device transmits a first command to instruct a control target functional block to the other device, a control target functional block of a second command transmitted from the one device is determined as the functional block instructed by the first command. Consequently, by designating the control target functional block by the transmission of the first command, it is not necessary to designate the control target functional block when the second command is transmitted later, making it possible to simplify command structure and to conduct good control of the other device by the one device with simple structure.

According to a second aspect, there is provided a data transmission method according to the first aspect wherein the first command is instructed by putting up a specified flag. Consequently, the control target functional block can be easily designated.

According to a third aspect, there is provided a data transmission method according to the first aspect wherein the communication network is a wireless communication network and the command is transmitted using a first channel secured in the wireless transmission network. Consequently, a control target can be easily designated by wireless communication.

According to a fourth aspect, there is provided a data transmission method according to the third aspect, if the second command instructs the transmission of stream data, the stream data is transmitted using a second channel secured in the wireless communication network. Consequently, the good transmission of the stream data can be achieved using a channel different from the channel of the command.

According to a fifth aspect, there is provided a data transmission method according to the first aspect wherein the communication network is a network which connects devices by a specified bus line; and the command is transmitted by asynchronous communication on the bus line. Consequently, a control target can be easily designated by the data transmission using the bus line.

According to a sixth aspect, there is provided a data transmission method according to the fifth aspect wherein if the transmission of the stream data is instructed by the second command, the stream data is transmitted over isochronous communication on the bus line. Consequently, the good transmission of the stream data over isochronous communication can be achieved.

According to a seventh aspect, there is provided a data transmission method for transmitting a command and a response each of a specified type between one device-and the other device capable of bidirectionally transmitting data in a specified transmission network wherein if the one device transmits a first command to check a control target functional block to the other device in the transmission network, the other device transmits a corresponding functional block in a response to the first command. Consequently, the control target functional block of a to-be-controlled device can be easily checked from the other device, simplifying checking to be conducted if the control target functional block is specified in advance and controlled.

According to an eighth aspect, there is provided a data transmission method according to the seventh aspect wherein the first command is instructted by putting up a specified flag. Consequently, command structure can be simplified.

According to a ninth aspect, there is provided a data transmission system for transmitting a command of a specified type between a first device and a second device capable of bidirectionally transmitting data in a specified transmission network wherein the data transmission system comprises, as the first device, a first communication means for communicating with the second device through the network; and a first control means for generating a first command to instruct a control target functional block in the second device and a second command to instruct the execution of a specified function to the functional block instructed by the first command, and comprises, as the second device, a second communication means for communicating with the first device through the network; and a second control means for storing the functional block instructed by the first command when the second communication means receives the first command, and for executing the function instructed by the second command to the stored functional block when the second communication means receives the second command. Consequently, by designating the control target functional block by the transmission of the first command from the first device, it is not necessary to designate the control target functional block when the second command is transmitted later, making it possible to simplify command structure accordingly and to conduct good control of the second device from the first device with simple structure.

According to a tenth aspect, there is provided a data transmission system according to the ninth aspect wherein the first control means generates the first command by putting up a predetermined bit in the command. Consequently, the control target functional block can be easily designated.

According to an eleventh aspect, there is provided a data transmission system for transmitting a command and a response each of a specified type between a first device and a second device capable of bidirectionally transmitting data in a specified transmission network wherein the data transmission system comprises, as the first device, a first communication means for communicating with the second device through the network; and a first control means for generating a first command to check a control target functional block in the second device, and comprises, as the second device, a second communication means for communicating with the first device through the network; and a second control means for transmitting, as a response, the control target functional block from the second communication means when the second communication means receives the first command. Consequently, the functional block which is the control target of the second device can be easily checked from the first device and checking can be easily conducted if the control target functional block is specified in advance and controlled.

According to a twelfth aspect, there is provided a data transmitting apparatus connected to a specified network, comprising: a communication means for bidirectionally communicating with the other device connected to the data transmitting apparatus through the network; and a control means for generating a first command to instruct a control target function block in a specified device connected through the network and a second command to instruct execution of a specified function to the functional block instructed by the first command. Consequently, by designating the control target functional block by the transmission of the first command, it is not necessary to designate the control target functional block when the second command is transmitted later, making it possible to simplify command structure accordingly and to control the other device with simple structure.

According to a thirteenth aspect, there is provided a data transmitting apparatus according to the twelfth aspect wherein the first control means generates the first command by putting up a predetermined bit in the command. Consequently, the control target functional block can be easily designated.

According to a fourteenth aspect, there is provided a data transmitting apparatus connected to a specified network, comprising: a communication means for bidirectionally communicating with the other device connected to the data transmitting apparatus through the network; and a control means for generating a first command to check a control target functional block in a specified device connected through the network and transmitting the first command from the communication means. Consequently, the functional block which is a control target of a to-be-controlled device can be easily checked and checking can be easily conducted if the control target functional block is specified in advance and controlled.

According to a fifteenth aspect, there is provided a data transmitting apparatus according to the fourteenth aspect wherein the control means generates the first command by putting up a predetermined bit in the command. Consequently, command structure can be simplified.

According to a sixteenth aspect, there is provided a data transmitting apparatus connected to a specified network, comprising: a communication means for bidirectionally communicating with the other device connected to the data transmitting apparatus through the network; and a control means for storing a functional block instructed by a first command when the communication means receives the first command, and for executing a function instructed by a second command to the stored functional block when the communication means receives the second command. Consequently, if the control target functional block is designated by the transmission of the first command, the control target functional block is specified when the second command is received later and surely controlled by the other device with the command of simple structure.

According to a seventeenth aspect, there is provided a data transmitting apparatus according to the sixteenth aspect wherein the control means discriminates the first command by discriminating a specified bit in the command. Consequently, the control target functional block can be easily designated.

According to an eighteenth aspect, there is provided a data transmitting apparatus connected to a specified network, comprising: a communication means for bidirectionally communicating with the other device connected to the data transmitting apparatus through the network; and a control means for transmitting a response, to which information instructing a set control target functional block is added, from the communication means to a sender of the command if discriminating that the communication means receives the command to examine the control target functional block of the data transmitting apparatus. Consequently, the control target functional block of the apparatus can be easily checked from the other device and checking can be easily conducted if the control target functional block is specified in advance and controlled.

According to a nineteenth aspect, there is provided a data transmitting apparatus according to the eighteenth aspect wherein the control means determines that the command is a command to check the functional block by discriminating a predetermined bit in the command. Consequently, it is possible to easily discriminate that the command is to check the functional block simply by discriminating the predetermined bit.

### BRIEF DESCRIPTION FO THE DRAWINGS

FIG. 1 is a block diagram showing an example of the structure of a wireless transmitting portion according to an embodiment of the present invention;
FIG. 2 is a block diagram showing an example of an audio recording and reproducing apparatus according to an embodiment of the present invention;
FIG. 3 is a block diagram showing an example of a remote controller according to an embodiment of the present invention;
FIG. 4 is an explanatory diagram showing an example of protocol stack;
FIG. 5 is an explanatory diagram showing an example of the hierarchical structure of wireless communication;
FIG. 6 is an explanatory diagram showing an example of the setting of communication frequency;
FIG. 7 is an explanatory diagram showing a frequency hopping condition;
FIG. 8 is an explanatory diagram showing an example of single-slot packet arrangement according to the time axis;
FIG. 9 is an explanatory diagram showing an example in which single-slot packets and multi-slot packets are mixed according to the time axis;
FIG. 10 is an explanatory diagram showing an example of the transmission state between a master and a slave;
FIG. 11 is an explanatory diagram showing an example of network structure;
FIG. 12 is a timing diagram showing an example of communication with SCO link;
FIG. 13 is a timing diagram showing an example of communication based on asynchronous communication method;
FIG. 14 is a timing diagram showing an example of communication based on isochronous communication method;
FIG. 15 is a timing diagram showing an example of communication based on broadcast communication method;
FIG. 16 is a timing diagram showing an example of communication in case where SCO link and ALC link are used together;
FIG. 17 is an explanatory diagram showing an example of the structure of clock data;
FIG. 18 is an explanatory diagram showing an example of the structure of address;
FIG. 19 is a structure diagram showing an example of generation processing of frequency hopping pattern;
FIG. 20 is an explanatory diagram showing an example of packet format;
FIG. 21 is an explanatory diagram showing an example of the structure of access code;
FIG. 22 is an explanatory diagram showing an example of the structure of a packet header;
FIG. 23 is an explanatory diagram showing an example of the structure of payload;
FIG. 24 is an explanatory diagram showing an example of the structure of a payload header in a single-slot packet;
FIG. 25 is an explanatory diagram showing an example of the structure of a payload header in a multi-slot packet;
FIG. 26 is an explanatory diagram showing an example of the structure of the payload of FHS packet;
FIG. 27 is an explanatory diagram showing an example of condition transition of devices;
FIG. 28 is an explanatory diagram showing an example of communication for inquiry;
FIG. 29 is a timing diagram showing an example of inquiry processing;
FIG. 30 is an explanatory diagram showing an example of call communication;
FIG. 31 is a timing diagram showing an example of call processing;
FIG. 32 is an explanatory diagram showing an example of hierarchical structure based on the AV/C protocol;
FIG. 33 is an explanatory diagram showing an example of packet structure based on the AV/C protocol;
FIG. 34 is an explanatory diagram showing an example of the building of connection based on the AV/C protocol and the transmission of a command and a response;
FIG. 35 is an explanatory diagram showing an example of release connection based on the AV/C protocol;
FIG. 36 is an explanatory diagram showing an example of data structure based on the AV/C protocol;
FIG. 37 is an explanatory diagram showing an example of commands;
FIG. 38 is an explanatory diagram showing an example of a command and a response;
FIG. 39 is an explanatory diagram showing an example of transmission among devices according to an embodiment of the present invention;
FIG. 40 is an explanatory diagram showing an example of command structure according to an embodiment of the present invention;
FIG. 41 is an explanatory diagram showing an example of a control command transmission state;
FIG. 42 is an explanatory diagram showing an example of command and response data in the example of FIG. 41;
FIG. 43 is an explanatory diagram showing an example of a status command transmission state according to an embodiment of the present invention;
FIG. 44 is an explanatory diagram showing an example of command and response data in the example of FIG. 43;
FIG. 45 is an explanatory diagram showing an example of the format of a pass-through command; and
FIG. 46 is an explanatory diagram showing examples of operation id's of the pass-through command.

### BEST MODE FOR CARRYING OUT THE INVENTION

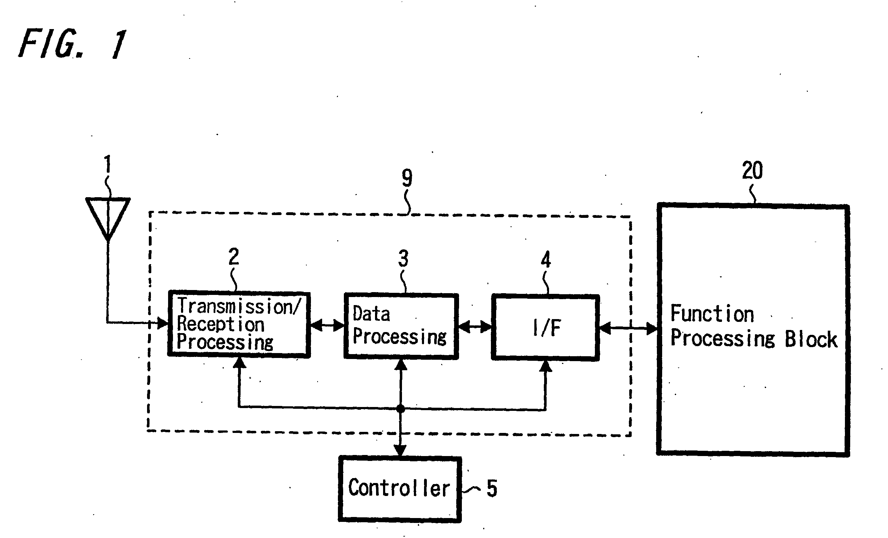

Hereinafter, an embodiment of the present invention will be described with reference to FIGS. 1 to 46.

According to the present invention, a short-distance wireless transmission method standardized based on the Bluetooth norm is applied to a system in which a wireless network is built among plural devices. Here, the system is constituted mainly with electronic devices such as video devices and audio devices.

FIG. 1 is a block diagram showing an example of the structure of a wireless transmitting portion according to an embodiment of the present invention. A transmission/reception processing portion 2 connected to an antenna 1 executes high-frequency signal processing so as to carry out radio transmission processing and radio reception processing. A signal to be transmitted by the transmission/reception processing portion 2 is transmitted at a channel set up at an interval of 1 MHz in 2.4 GHz band. A signal of each channel is subjected to a processing called frequency hopping for changing transmission frequency at a slot interval which will be described later. Assuming that the frequency hopping is carried out for each slot, because a slot takes 625µseconds, the frequency is switched 1,600 times per second thereby preventing an interference with another radio communication. As modulation method for radio transmission signal, modulation method called GFSK (Gaussian filtered FSK) is employed. This modulation method is a frequency shift modulation method in which the band is limited by a low-pass filter having a frequency transmission characteristic having Gaussian distribution. A signal received by the transmission/reception processing portion 2 and a signal to be transmitted by the transmission/reception processing portion 2 are subjected to base band processing by a data processing portion 3. The Bluetooth standard employs TDD (Time Division Duplex) in which basically transmission and reception are carried out alternately and the data processing portion 3 carries out a processing of the transmission slot and a processing of reception slot alternately. A function processing block 20 is connected to the data processing portion 3 through an interface portion 4 so that received data is supplied to the function processing block 20 and data transmitted from the function processing block 20 is converted to transmission slots by the data processing portion 3. A processing for transmission in the transmission/reception processing portion 2, the data processing portion 3 and the interface portion 4 is carried out under control of the controller 5. In stead of the controller 5 a central control unit incorporated in, for example, respective devices can be used. Aside from the central control unit, a dedicated controller prepared for short distance wireless communication may be used.

The transmission/reception processing portion 2, the data processing portion 3, the interface portion 4 and the controller 5 correspond to the short distance wireless communication portion 100 for carrying out the Bluetooth communication.

The function processing block 20 connected to the short distance wireless communication portion 10 serves for a portion for carrying out actually the function of the apparatus. For example, in case of a video camera and a video recording/reproducing apparatus, it corresponds to a portion for processing for recording and reproduction of video data and audio data. In case of an audio recording/reproducing apparatus, it corresponds to a portion for processing for recording and reproducing audio data. In case of a computer unit, it corresponds to a portion for carrying out data processing based on a prepared program. By incorporating or externally connecting the transmission processing unit having such a structure in/to various appliances, data transmission among various appliances is enabled.

In addition, the short distance wireless communication portion 10, other than the case of being incorporated in the electronic equipment main body, may be constructed by an apparatus separate from the apparatus main body so as to be externally connected thereto.

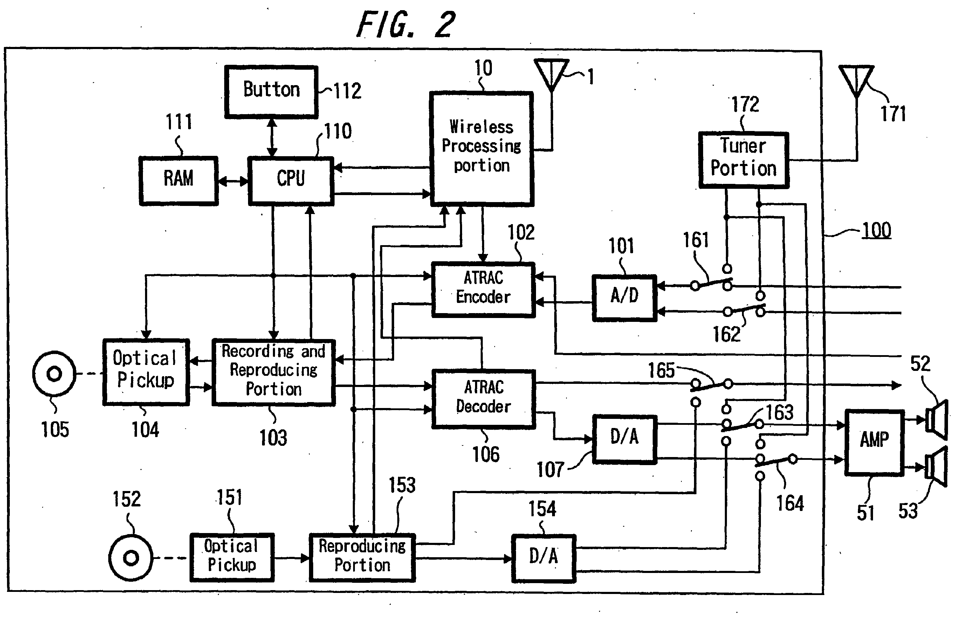

FIG. 2 is a diagram showing an example of the configuration in which the block of the audio recording/reproducing apparatus 100 is employed as the function processing block 20. The audio recording/reproducing unit 100 of this example comprises a function block which by using magneto-optic disc or optical disc incorporated in a resin package called mini disc (MD) as a recording medium, records/reproduces voice signal or the like as digital data, a function block in which by using an optical disc called compact disc (CD) as a recording medium, reproduces voice signal or the like as digital data and a function block for receiving radio broadcasting.

In the structure of the recording system of the audio recording/reproducing apparatus 100, analog voice signal of two channels inputted from outside are converted to digital voice data by an analog/digital converter 101. The converted digital voice data is supplied to an ATRAC encoder 102 and encoded to voice data according to ATRAC (Adaptive Transform Acoustic Coding) method. If the digital voice data is inputted directly from outside, that inputted voice data is supplied directly to the ATRAC encoder 102 not through the analog/digital converter 101. Data encoded by the encoder 102 is supplied to the recording/reproducing portion 103 and subjected to a processing for recording. An optical pickup 104 is driven based on the processed data so as to record data into a disc (magneto-optic disc) 105. Meanwhile, magnetic field modulation is carried out by a magnetic head (not shown) at the time of recording.

In the meantime, the audio recording/reproducing apparatus 100 of this example has a tuner portion 172, which is capable of supplying two-channel audio signal of radio broadcasting received through an antenna 171 to an input stage of the analog/digital converter 101 through change-over switches 161, 162. Therefore, audio signal received by the tuner portion 172 can be recorded in the disc 105.

As for the configuration of the reproducing system of the disc recording/reproducing portion, data recorded in the disc (magneto-optic disc or optical disc) 105 is read out by the optical pickup 104 and subjected to reproduction processing by the recording/reproducing portion 103 so as to obtain voice data compressed according to the ATRAC method. This reproduced voice data is supplied to an ATRAC decoder 106 so as to decode to digital voice data of a predetermined style and then, the decoded voice data is supplied to a digital/analog converter 107, converted to two-channel analog voice signal and outputted. If digital voice data is intended to be outputted directly to outside, voice data decoded by the ATRAC decoder 106 is outputted directly not through the digital/analog converter 107. An example shown in FIG. 2 has such a structure that the outputted voice signal converted to analog is supplied to an amplifier unit 51, and subjected to voice output processing such as amplification so as to output two-channel voice (audio) from connected speakers 52, 53.

As the configuration of another disc reproducing portion than the recording/reproducing portion described up to here, data recorded in a disc (optical disc) 152 is read out by an optical pickup 151 and subjected to reproduction processing by a reproducing portion 153 so as to obtain digital voice data of two-channel or the like. This reproduced voice data is supplied to a digital/analog converter 154, converted to two-channel analog voice signal and outputted. If it is intended to output digital voice data directly to outside, it is outputted directly not through the digital/analog converter 154. In the example of FIG. 2, as the output system for analog voice signal, reproduced output from a disc recording/reproducing portion using MD and reproduced output from a disc reproducing portion using CD are selectively supplied to an amplifier 51 by means of change-over switches 163, 164. Further, the output system for digital voice signal is changed over by the change-over switch 165 in the same manner.

The audio recording/reproducing apparatus 100 of this embodiment has the radio processing block 10 for carrying out radio communication according to the aforementioned Bluetooth method to carry out two-way radio communication with a mating radio processing block through the connected antenna 1. For example, voice data received by this radio processing block 10 is supplied to the recording/reproducing portion 102 through the ATRAC encoder 102 and recorded in the disc 105. Further, voice data reproduced from the disc 105 is supplied to the radio processing block 10 from the recording/reproducing portion 102 through the ATRAC decoder 106 so as to enable radio communication to the mating unit. Further, voice data reproduced from the disc 152 can be supplied from the reproducing portion 153 to the radio processing block 10 and transmitted to a mating appliance by radio. Voice data received by the tuner 172 can be supplied to the radio processing block 10 and transmitted to the mating appliance by radio.

Recording processing, reproduction processing and radio broadcasting reception processing by the audio recording/reproducing apparatus 100 and transmission and reception by the radio processing block 10 are carried out under a control by the central control unit (CPU) 110. A memory 111, which is a work RAM, is connected to the CPU 110. Further, operation information from a control panel 112 is supplied to the CPU 110 to carry out action control corresponding to the operation information. If control data such as control command and response which will be described later is received by the radio processing block 10, that data is supplied to the CPU 110 so that the CPU 110 can carry out action control and processing correspondingly. If it is intended to transmit the control data such as control command and response from this unit 100 by radio, control data to be transmitted is generated within the CPU 110 and transmitted from the radio processing block 10 by radio.

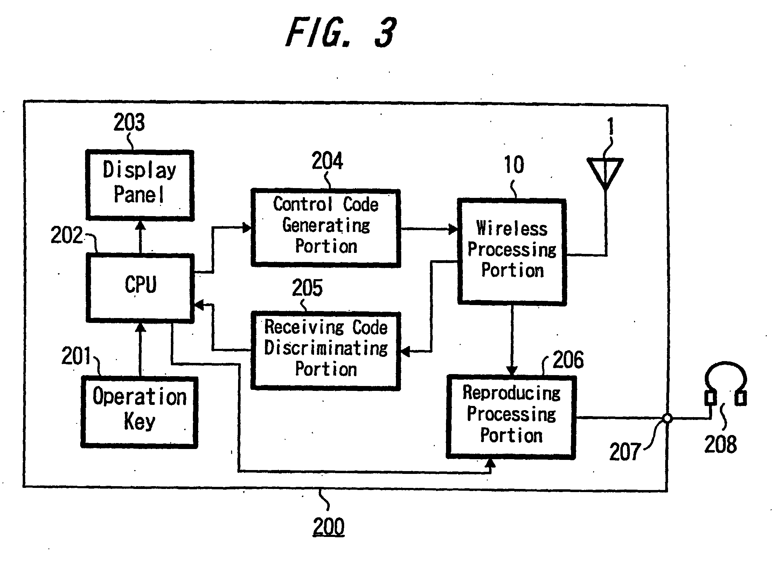

FIG. 3 is a diagram showing an example of the structure of a remote control unit 200 for controlling the audio recording/reproducing apparatus 100 from a remote place. The remote control unit 200 transmits radio signal based on the Bluetooth standard to the audio recording/reproducing apparatus 100 so as to control an operation of the audio recording/reproducing apparatus 100.

In the remote control unit 200, an operation key 201 for instructing various actions is prepared and an operation of the operation key 201 is recognized by the central control unit (CPU) 202, which is a control means. Further, it has a display panel 203 for displaying an operating condition and an action of a controlled unit, so that an appropriate display is carried out with characters, numerals and graphics under control of the CPU 202.

A control code generating portion 204 is connected to the CPU 202, so that for example when the operation key 201 is operated, a control code corresponding to that controlled action is generated in the control code generating portion 204 and that generated control code is transmitted to the radio processing block 10 by radio. Further, the control code received by the radio processing block 10 is supplied to a reception code determining portion 205 and the reception code determined by this reception code determining portion 205 is supplied to the CPU 202.

The remote control unit 200 of this has a function for receiving audio data transmitted by radio from the audio recording/reproducing apparatus 100, so that the received audio is outputted to the remote control unit 200 from the described head phone 208. That is, when audio data is received by the radio processing block 10, that audio data is supplied to the reproduction processing portion 206 to carry out audio reproduction processing such as demodulation, analog conversion and amplification and then the processing audio signal is supplied to the head phone 208 connected to a head phone terminal 207 and outputted.

Remote control of the audio recording/reproducing apparatus 100 can be carried out from the remote control unit 200 by transmitting radio signal based on the Bluetooth standard between the audio recording/reproducing apparatus 100 having such a structure and the remote control unit 200. Further, an operating condition of the audio recording/reproducing apparatus 100 can be displayed through the display panel 203 possessed by the remote control unit 200. Audio reproduced from a disc by the audio recording/reproducing apparatus 100 can be outputted through the head phone 208 connected to the remote control unit 200.

Next, a processing for executing wireless communication with other devices based on the bluetooth method using the short-distance wireless communication portion mounted on each device will be described later.

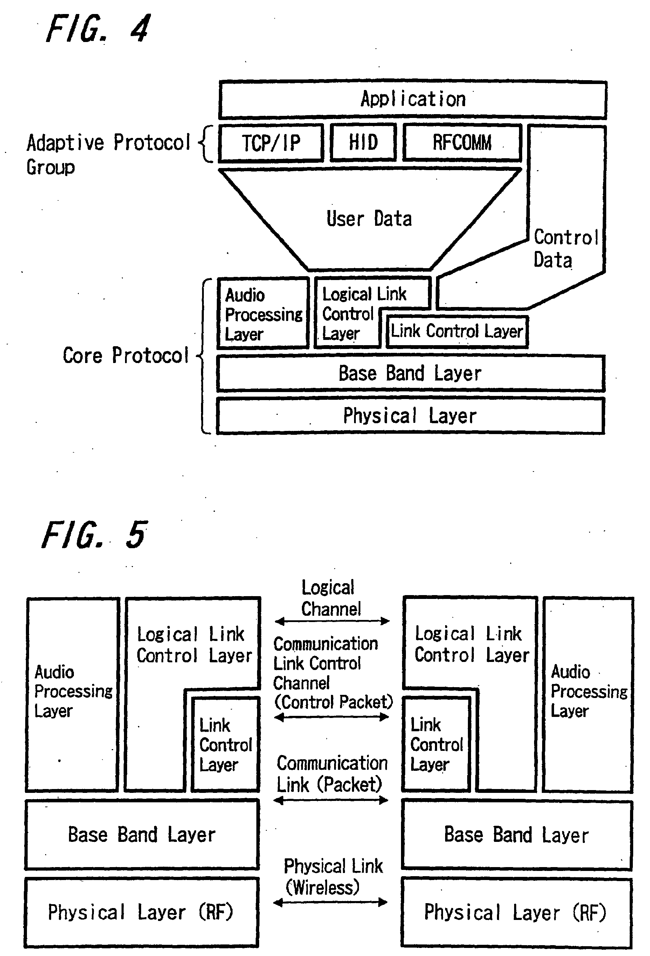

FIG. 4 is a diagram showing a protocol stack necessary for carrying out wireless communication based on the bluetooth. The protocol for the entire system of the bluetooth is divided to a core protocol, which is a major portion of the protocol of the bluetooth, application software which executes application service and an adaptive protocol group for matching communication protocols between the core protocol and application.

The protocol of the bluetooth core is composed of five protocols or comprised of a physical layer, a base band layer, an actual data processing layer and a logical link control layer, successively provided on top of another from the bottom layer.

The adaptive protocol group adapts the core protocol to application software so that various kinds of existing applications can be applied. This adaptive protocol group includes, for example, TCP/IP protocol, RFCOMM protocol for emulating serial port, a driver of an device (HID: Human Interface Device) which user operates and the like. For transmission of the AV/C data, which will be described later, a protocol which adapts a profile corresponding to this adaptive protocol group is prepared. The structure of a protocol necessary for transmitting the AV/C data will be described later.

As physical layer, frequency hopping type spectrum diffusion method using a frequency band of 2.4 GHz is employed. Transmission power is restricted to about 100 mW maxium, assuming a wireless communication over a short-distance of about 100 m. Further, this physical layer allows transmission power to be reduced up to - 30 dBm minimum by control from the link layer.

The base band layer is defined as a protocol for interfacing actual transmission/reception data with the physical layer. This layer provides with a communication link for transmitting/receiving data sent from a higher layer. At this time, control of the frequency hopping and control of the time axis slot are carried out. Further, processings for resending a packet, error correction and error detection are controlled by this base band layer.

The link control layer is a protocol for interfacing the transmission/reception packet on communication link is a protocol, which specifies setting of communication link to the base band layer or setting of various communication parameters relating to that link. Those are defined in the link control layer as control packet and communicate with a link control layer of an opposing terminal as required. This layer receives a direct control from a higher level application as required.

In the audio layer, audio data is exchanged after a communication link allowing the link control layer to transmit or receive data is set up. The audio data mentioned here refers to mainly audio data for communication through telephone and includes a dedicated processing layer at a relatively lower level layer in order to suppress data transmission delay to a minimum limit.

The logical link control layer is a protocol for interfacing with the link control layer and the base band layer so as to control the logical channel. Other transmission data than audio data which the audio layer handles is provided from a high level application to ethical link layer and actual data which is exchanged there is exchanged without making conscious of the size and timing of the data packet. For the reason, the logical link control layer controls data of the high level application as logical channel so as to carry out data division and data reconstruction.

FIG. 5 shows a processing at each layer when wireless communication is carried out between two devices. A physical wireless communication line link is set up in the physical layer and transmission/reception of the packet is carried out through a link set up in the base band layer. Transmission and reception of control packet is carried out through a communication link control channel. Transmission and reception of user data packet is carried out through logical channel. This user data corresponds to stream data or command which is required to be transmitted.

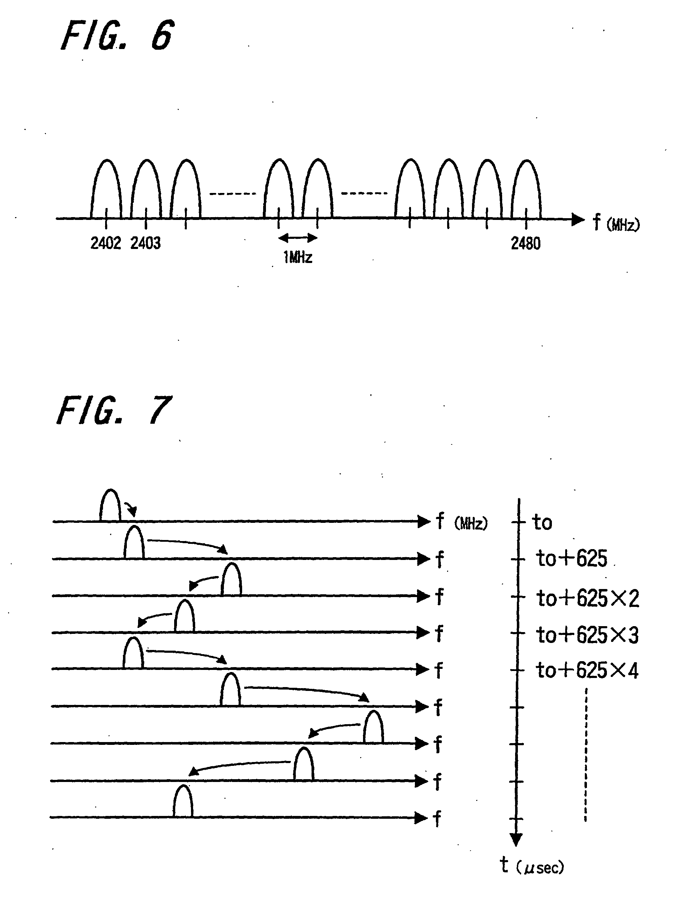

Next, physical communication frequency set-up processing upon wireless communication based on this method will be described. FIG. 6 is a diagram showing the frequency for use based on this method and as shown in FIG. 6, there are 79 communication frequencies at an interval of 1 MHz from 2402 MHz to 2480 MHz. Each packet to be transmitted occupies a single transmission spectrum in these 79 transmission frequencies. Then, the transmission spectrum for use changes (hopping) every 625 µseconds.

FIG. 7 shows an example of this communication frequency hopping, in which the communication frequency changes at random every 625 µseconds from a specific timing t₀. If the communication frequency changes every 625 µseconds, the hopping occurs about 1600 times for a second, so that it is diffused within a band shown in FIG. 7 and transmitted, indicating that the spectrum diffusion is being caused.

In case of bluetooth, a unit of the packet is 625 µseconds. This single unit of the packet may be used continuously to carry out transmission. For example, when bidirectional transmission is carried out between two devices, communications of both directions do not use the same quantity of the packets and in some case, plural packets may be used for communication in one direction.

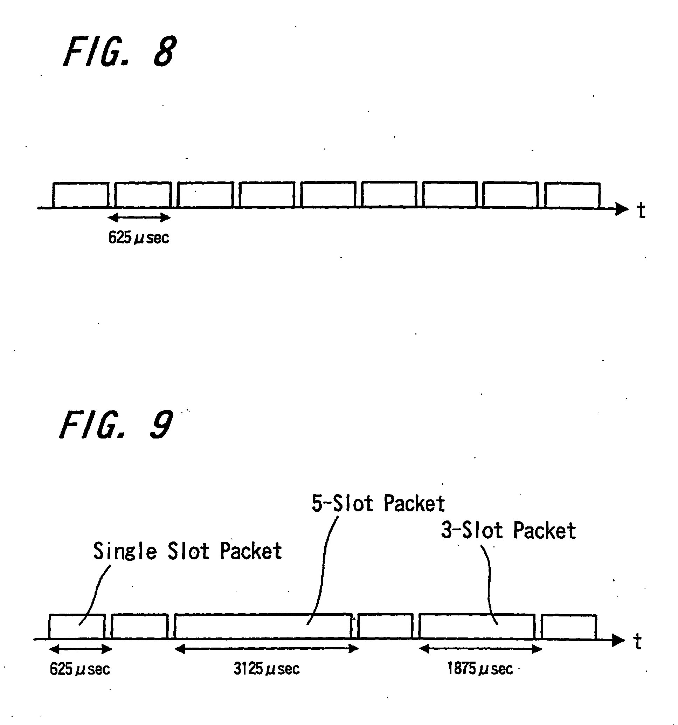

If all packets to be transmitted are packets of 625 µseconds as shown in FIG. 8, frequency hopping occurs every 625 µseconds as shown in FIG. 7. Contrary to this, in case where as shown in FIG. 9, three packets are used continuously or five packets are used continuously, transmission frequency is fixed while that slot continues.

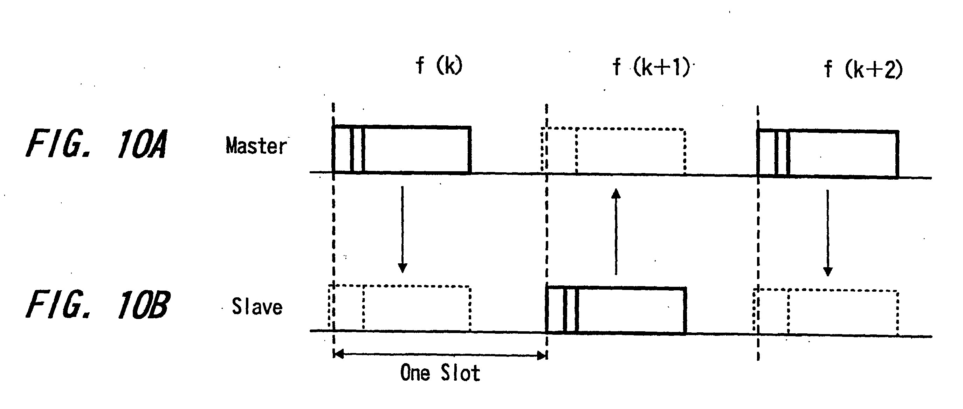

FIG. 10 shows communication status between two devices. When one device for carrying out wireless communication is assumed to be master while the other one is assumed to be slave, data of slot configuration is sent from the master to the slave in the period of a slot (625 µseconds) (FIG. 10A) and in a next slot period, data of slot configuration is sent from the slave to the master (FIG. 10B). Hereinafter, the alternate transmission is repeated as long as the transmission continues. The frequency for wireless communication is changed such that the frequency is f(k), f(k+1), f(k+2), ...at every slot as described above.

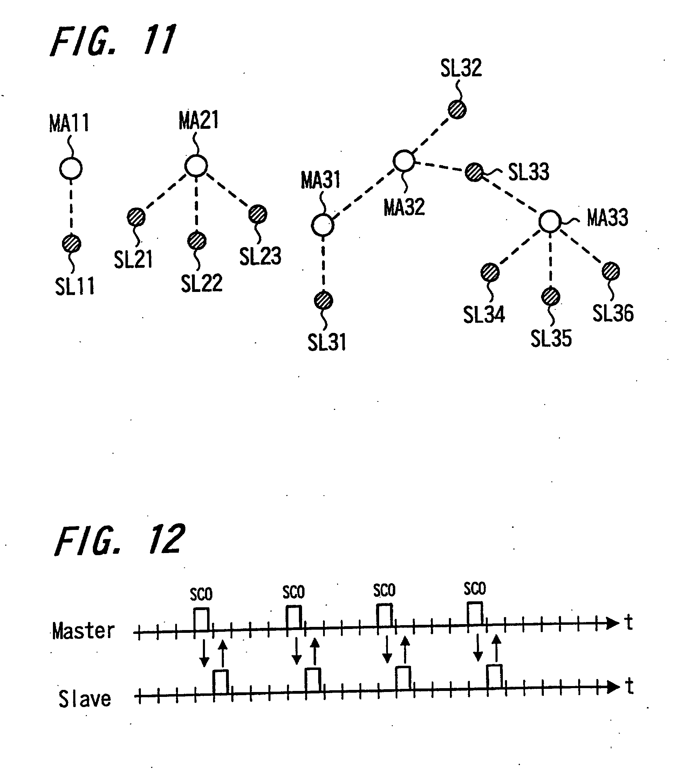

FIG. 11 is a diagram showing an example of the network structure composed of plural devices. In a communication system standardized according to the bluetooth, its network may be constructed with not only one-to-one wireless communication, but also with plural devices.

That is, in case where wireless communication is carried out between two devices, one device serves as the master while the other device serves as the slave as shown on the left end of FIG. 11, so that bi-directional wireless communication is executed between master MA11 and slave SL11 under a control of the master MA11. As shown in the center of FIG. 11, it is permissible to prepare three slaves SL21, SL22, SL23 controlled by, for example, a single master MA 21 so that the network is constructed so as to carry out wireless communication among these four devices.

Further, as shown on the right end of FIG. 11, it is permissible to prepare three masters MA31, MA32, MA33 and slaves SL31, SL32, SL33, SL34, SL35, SL 36 controlled independently by each master, construct three networks and then connect these three networks so as to expand the network configuration. In any case, direct communication cannot be executed between the slaves but communication is always executed through the master.

Meanwhile, a network comprised of a master and a slave directly communicating with that master is called pico-net. A network group having plural masters (that is, a network group comprised of plural pico-nets) is called caster net.

Next, the kinds of links for carrying out communication between devices based on bluetooth will be described. The bluetooth includes two kinds of the links, SCO (Synchronous Connection-Oriented) link and ACL (Asynchronous Connection-Less) link, which can be used separately depending on the purpose of application.

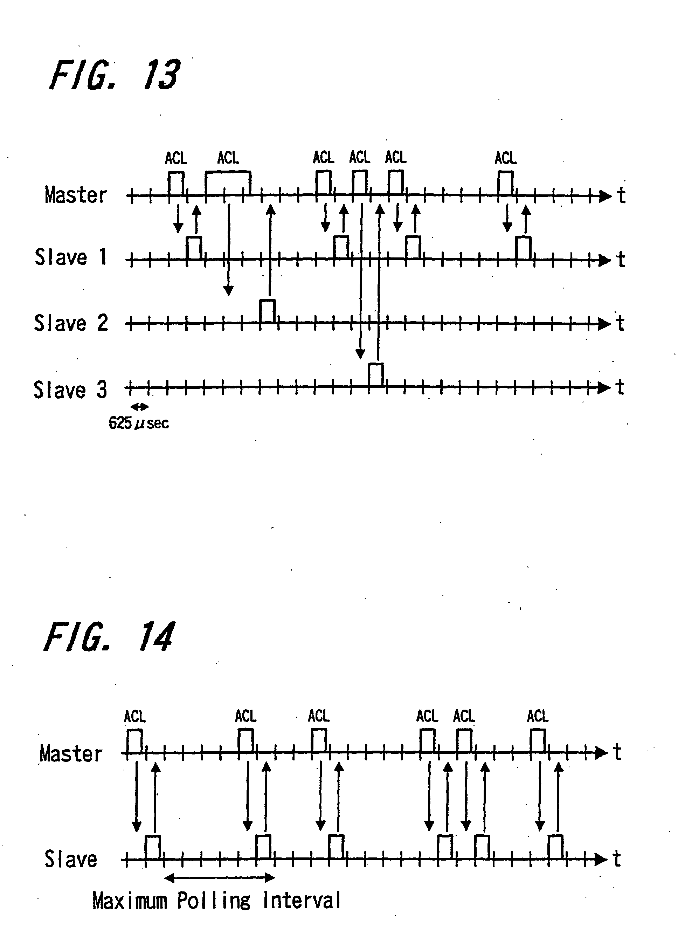

The SCO link is connection type which executes one-to-one communication between the master and a specific slave and so-called call switching type link. This link is used for an application in which real-time performance is required about mainly audio performance. In this SCO link, a communication slot is assured preliminarily at a specified interval on communication link within the pico-net and even if other data transmission occurs halfway, data transmission by the SCO link is taken as precedence. That is, as shown in FIG. 13, for example, SCO communication slot is transmitted alternately at a specified interval between the master and the slave.

This SCO link can support three SCO links maximum corresponding to a single master at the same time. In this case, three SCO links may be supported by a slave or a SCO link may be supported for each of different three slaves. Meanwhile, the SCO link has no resending function and no error correction code is attached to a packet to be transmitted through the SCO link.

The ACL link is so-called packet switching type connection type, which enables 1-to-multiple communication between the master and plural slaves. Although it is capable of communicating with any slave in the pico-net, effective communication speed of each slave may be changed depending on data quantity or the number of the slaves. The SCO link and the ACL lank may be used mixedly.

The ACL link allows a single master to communicate with up to seven slaves at the same time. However, the ACL link which can be set up to each slave within a pico-net is only one and a slave cannot set up plural ACL links at the same time. To activate plural applications with a single slave, it is necessary to protocol-multiplex a higher level application. Unless specified specially, ACL packet of single slot is used for communication between the master and the slave. For the slave to transmit the ACL packet of multi-slot, a permission from the master is needed. Although the master can reject a request for transmission of the ACL packet of the multi-slot from the slave, the slave always must receive a request for transmission from the master.

The master notifies the slave of only a upper limit value of the multi-slot and whether or not the ACL packet of the multi-slot should be transmitted depends upon determination of the slave. On the other hand, because which the ACL packet is single slot or multi-slot depends on the determination of the master, the slave needs to always prepare for receiving the multi-slot packet.

The ACL packet is provided with the following three packet communication methods irrespective of definitions of the single slot and multi-slot. The first one is asynchronous communication method (Asynchronous transfer), the second one is Isochronous communication method (Isochronous transfer) and the third one is broadcast communication method (Broadcast transfer).

The asynchronous communication method is a communication method for transmitting/receiving an ordinary packet. Data transmission speed is changed depending on traffic amount of slaves existing in the pico-net and packet resending due to deterioration of communication line quality.

FIG. 13 shows a case where three slaves (slaves 1, 2, 3) in the same pico-net communicates according to asynchronous communication method. The ACL packet is transmitted from the master to the respective slaves 1, 2, 3 in succession and each slave receiving the ACL packet resends a packet for confirming the reception to the master.

Meanwhile, stream data such as audio data and video data may be sometimes transmitted according to the asynchronous communication method. In case for transmitting stream data according to the asynchronous communication method, a time stamp is attached to each ACL packet so as to secure continuity of stream data on the reception side.

According to the Isochronous communication method, a packet is always transmitted from the master to the slave within the period of a predetermined time slot. This method allows to secure a minimum delay of data to be transmitted. In case of isochronous communication, the slot interval needs to be agreed as maximum polling time, between the master and the slave before communication based on isochronous communication method is started.

The master can specify the maximum polling interval to the slave forcibly and reject a request for setting isochronous communication method from the slave. However, the slave cannot specify the maximum polling interval to the master or make a request for setting isochronous communication.

FIG. 14 shows a case for carrying out communication between the master and the slave according to the isochronous communication method. As shown in FIG. 14, the ACL packet is transmitted from the master to a slave and just after receiving the ACL packet, the slave resends a packet for reception confirmation to the mater.

The broadcast communication method is set up by setting a slave identifier in the packet header to zero. Consequently, the broadcast communication packet can be sent from the master to all the slaves. A slave receiving the same packet does not transmit a packet for reception confirmation corresponding thereto. Although the slave does not confirm the reception, the master transmits broadcast communication packet continuously several times. The master needs to notify all the slaves of the frequency of the transmissions of plural times prior to broadcast communication.

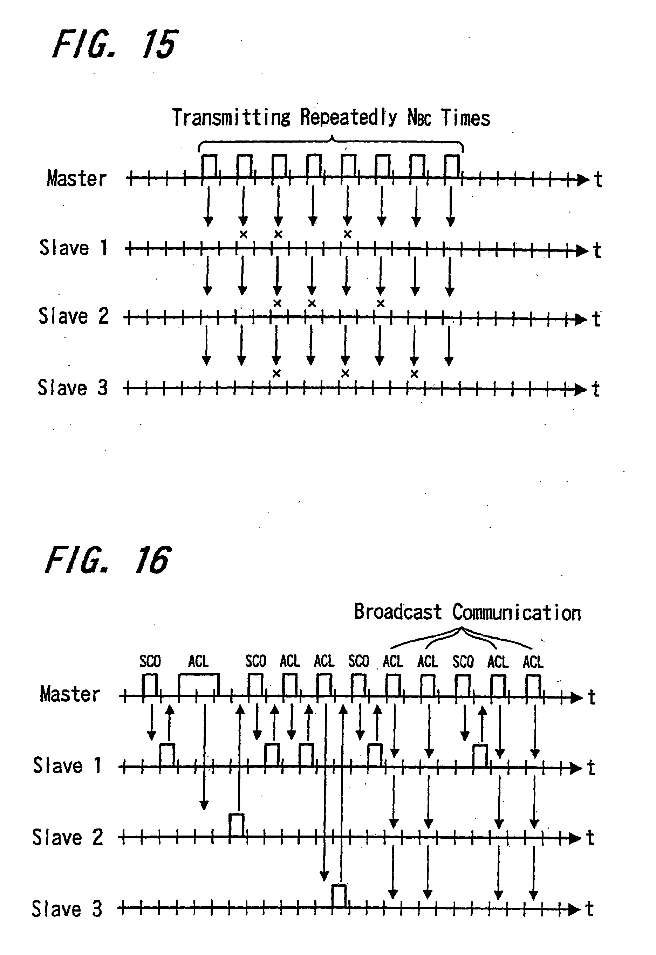

FIG. 15 shows an example of communication to all the slaves in the pico-net according to the broadcast communication method. A point marked with X in FIG. 15 indicates an example in which the slave cannot receive a packet and by transmitting NBC times repeatedly, broadcast communication can be carried out to all the slaves securely.

FIG. 16 is a diagram showing an example of communication using both the SCO link and ACL link. In this example, the SCO packet is transmitted through the SCO link between the master and the slave 1 at a predetermined cycle. The ACL packet is transmitted to three slaves 1, 2, 3 as required. Further, the broadcast communication packet is also transmitted repeatedly predetermined times. when a timing for sending the SCO packet arrives while this broadcast communication packet is being transmitted repeatedly, the SCO packet is transmitted.

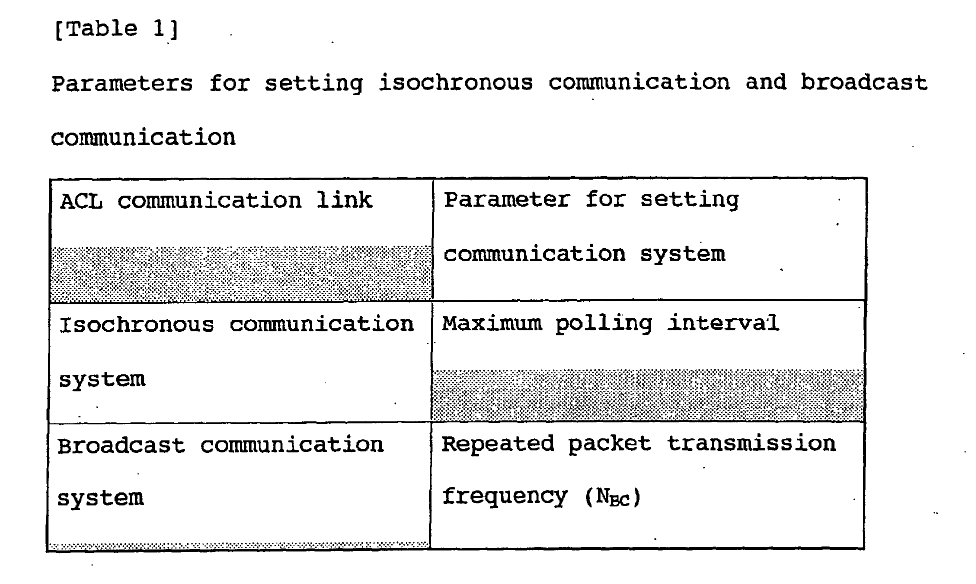

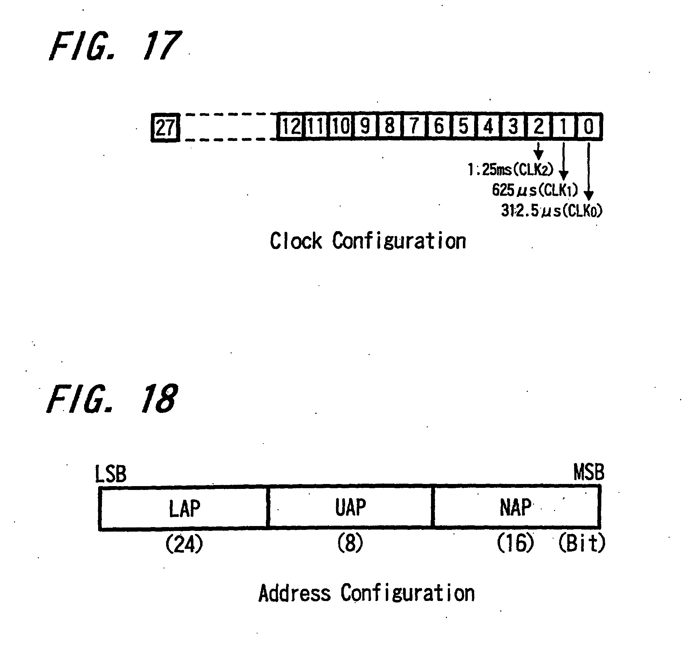

Next, the internal clock possessed by the master and the slave will be described. According to this communication system, respective devices use an internal clock so as to set up a frequency hopping pattern and the like. The clock possessed by the master and the slave is set up with a count value of, for example, a 28-bit counter of 0 to 27 as shown in FIG. 17. A single clock of this counter is 312.5 µseconds. This 312.5 µseconds is a minimum time unit for call processing and inquiry processing. In the 28-bit counter in which the value is counted up by one every 312.5 µseconds, a period is about 23 hours, thereby raising random characteristic of frequency hopping pattern.

The period of 312.5 µseconds set up with a clock value of 0 bit is a time period of transmission packet when the mater carries out call and inquiry. The period of 625 µseconds set up with a clock value of the first bit is a time period of a slot whose communication frequency is changed. The period of 1.25 m seconds set up with a clock value of the second bit is a transmission/reception time frequency of the master or slave. The period of 1.28 seconds set up with a clock value of the 12th bit is a clock timing in a time period for changing the reception frequency upon inquiry and call.

Each slave adds a specified offset value to its own clock so that it coincides with a clock of the master by referring to the master clock and then, uses the summed clock for communication.

When calculating a frequency hopping pattern in the master and slave, a 48-bit address added to each terminal as well as this clock is used as parameter. The 48-bit address is an absolute address which is defined according to an address system based on IEEE802 specification and allocated to each terminal of the bluetooth independently. FIG. 18 is a diagram showing the structure of a 48-bit address, in which its lower 24 bits is composed of LAP (Lower Address Part), next 8 bits is composed of UAP (Upper Address Part) and remaining 16 bits are composed of NAP (Non-significant Address Part).

For generation of the frequency hopping pattern synchronous in the pico-net, 24 bits of the entire LAP and lower 4 bits of the UAP in the master address, totaling 28 bits are used. Consequently, a frequency hopping pattern based on the master address is given to each pico-net. Because the master address is notified to the slave when communication status is gained, each slave can calculate the same frequency hopping pattern as the master independently.

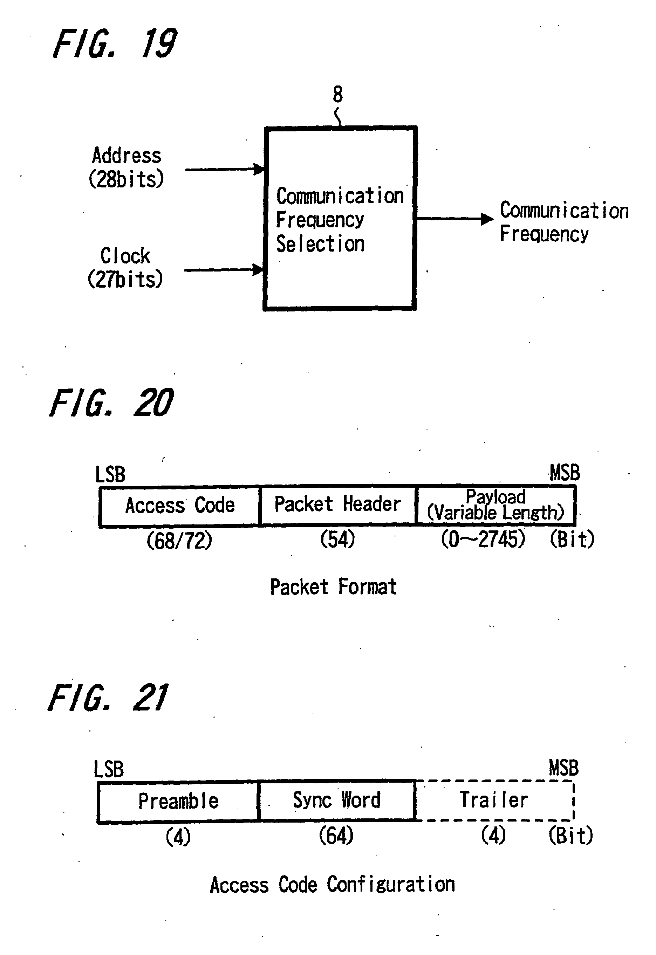

FIG. 19 is a diagram showing an example of the structure for calculating a communication frequency. According to this structure, the low level 28 bits of the master address and low level 27 bits of the 28-bit clock are supplied to a communication frequency selecting portion 8 and a communication frequency which is a channel frequency hopping pattern is automatically determined. The call frequency hopping pattern and the inquiry frequency hopping pattern are different from the channel frequency hopping pattern.

Next, the structure of data to be transmitted between the master and the slave will be described. FIG. 20 is a diagram showing a packet format. The packet is composed of three portions, access code, packet header and payload. The payload is set to a variable length depending on the amount of data to be transmitted at that time.

FIG. 21 is a diagram showing the structure of access code. The access code is composed of 68-bit or 72-bit data, indicating a destination of transmission packet and added to all packets to be transmitted/received. Depending on the kind of the packet, only this access code is attached.

Its preamble is composed of a fixed 4-bit length in which a pattern of 1, 0 is repeated depending on the LSB of a sync word. A trailer is composed of 4 bits in which a pattern of 1, 0 is repeated depending on the MSB of the sync word. Any one functions to remove the signal DC components of the entire access code.

The 48-bit synch word is 64-bit data generated with 24-bit LAP in the 48-bit address. This synch word is used to identify the pico-net. In case of transmission in which no master address or clock can be obtained, a different synch word may be used in a packet for use in inquiry and call.

Next Table 2 summarizes access code types.

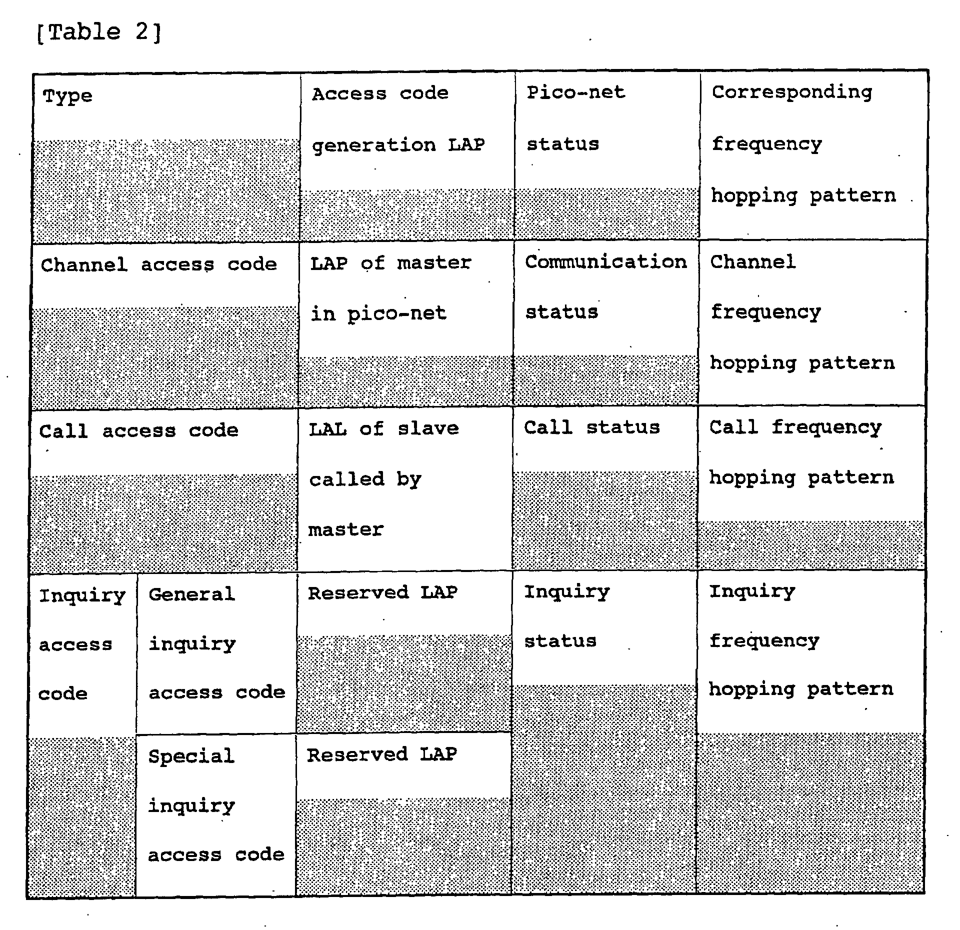

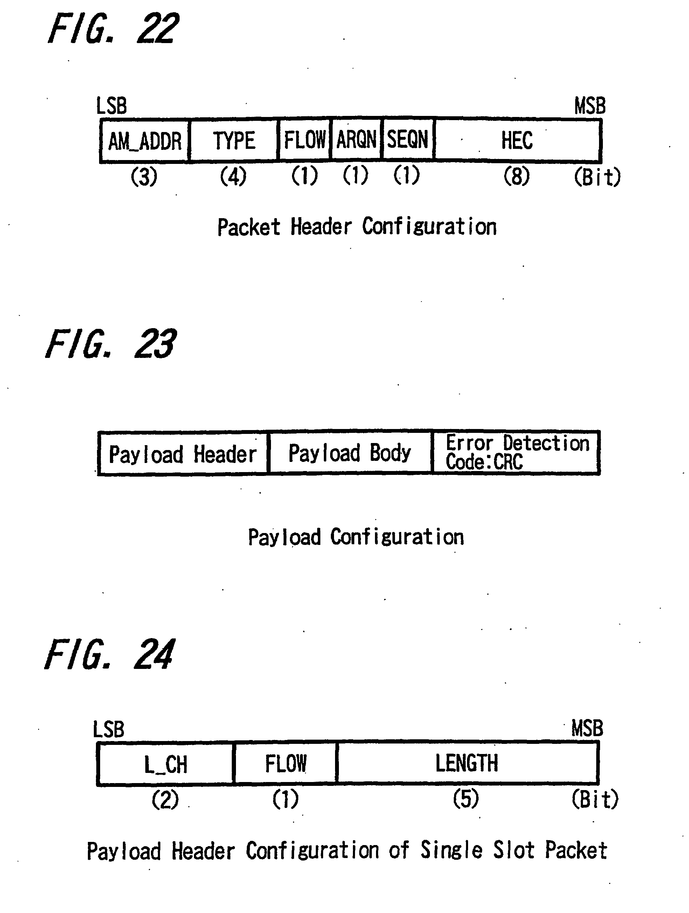

FIG. 22 is a diagram showing the structure of a packet header. The packet header is a portion including a parameter necessary for controlling the communication link in the base band layer.

The 3-bit AM ADDR is an identification field for specifying a slave on communication in the pico-net and a value to be allocated by the mater to each slave.

The 4-bit TYPE is a packet type field for specifying what packet the entire packet is.

The 1-bit FLOW is a field for use in control of flow control of a packet which communicates through the ACL link.

The 1-bit ARQN is a 1-bit field for use in notifying a packet transmission side of whether or not there is any error in a received packet. According to the bluetooth norm, any response packet for reception confirmation is not prepared and a packet reception confirmation is sent to a packet transmitter using this ARQN field. Depending on which this field value is 1 or 0, whether or not there is any error in the received packet or that there is an error is notified to the mating. Whether or not there is any error in the received packet is determined according to a header error detection code attached to a packet header of the received packet and an error detection code attached to the payload.

The 1-bit SENQ is a field for use for controlling so that the resent packet does not overlap on the reception side. When resending the same packet, the value is inverted between 1 and 0 alternately each time when a packet is transmitted.

The 8-bit HEC is a field in which the packet header error correction code is disposed. This error correction code is generated using a generating polynomial of g(D) = D⁸ + D⁷ + D⁵ + D² + D + 1. An initial value set up in an 8-bit shift register for generating error correction code sets up 8 bits of the UAP in an address for bluetooth described above. The address used here coincides with an address used for generating the access code. The following Table 3 summarizes the initial values upon generating this error correction code.

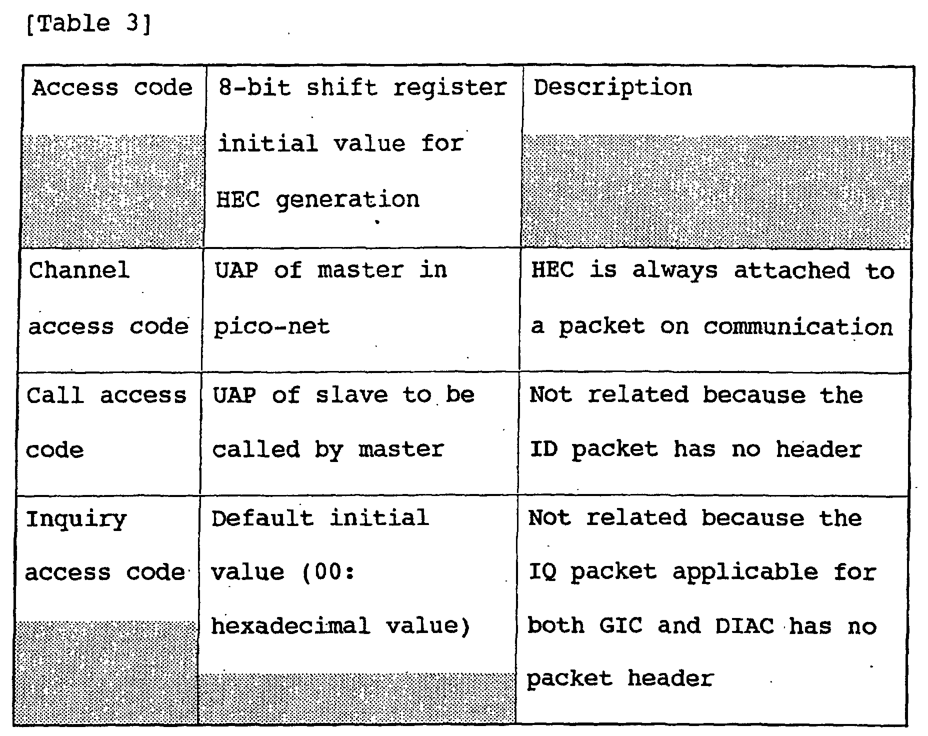

In order to identify a pico-net on communication, a channel access code (CAC) generated according to 24 bits of the LAP of the master address is used. In order to attain synchronism in transmission within the pico-net, it is necessary to synchronize the frequency hopping pattern with the time slot. At this time, even if other master having the same LAP exists nearby and further, the synchronism between the frequency and the time slot happens to coincide, it is possible to remove this by using the HEC which is a packet header error correction code.

The payload accommodates user data to be transmitted or received actually between terminals or control data. The user data includes data to be transmitted or received through the SCO link and data to be transmitted or received through the packet switching type ACL link.

FIG. 23 is a diagram showing the structure of payload of the ACL link. The payload is comprised of three components, payload header, payload body and error detection code and the length of the entire payload is variable. On the other hand, because the payload of the SCO link secures a communication slot cyclically, it does not resend data packet and is composed of only a payload body, while no payload header or error detection code is added.

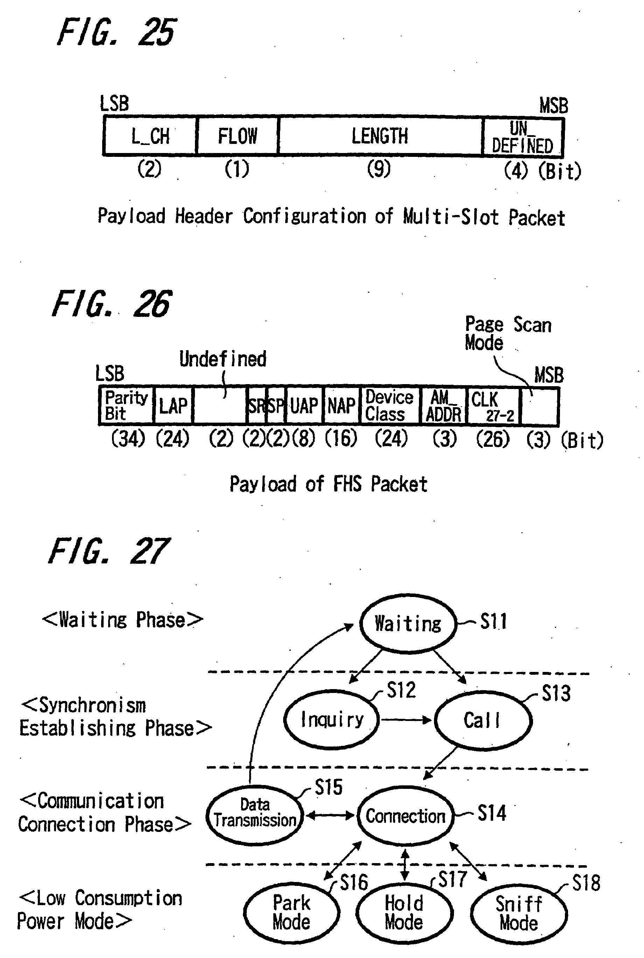

The payload header is a portion including a parameter necessary for controlling data of a higher layer than the base band layer and is data which is included in only the ACL link. FIG. 24 shows the structure of payload header of a single slot packet and FIG. 25 shows the structure of a payload header of a multi-slot packet.

The 2-bit L_CH data included in the payload header is a field for identifying a logical channel for specifying what is data of a higher layer than the base band layer. The SCO link and the ACL link are links in the base band layer and the control thereof is carried out according to information set up by the packet header. The L_CH identifies a logical channel which is defined by a higher level layer than the base band layer and is defined as shown in Table 4 to the three user logical channels.

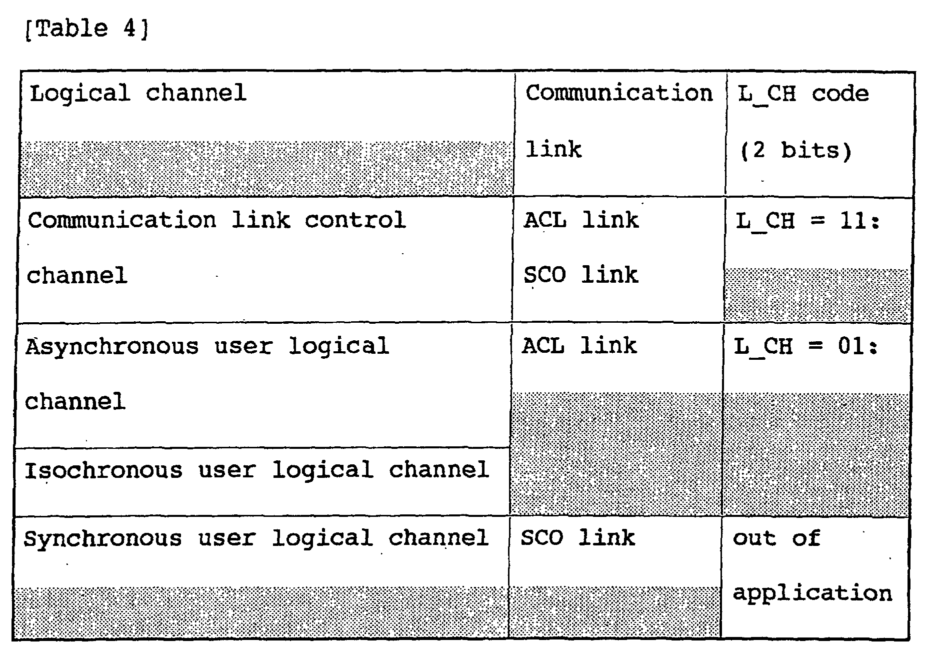

The 1-bit FLOW is a 1-bit data for use for flow control of data transmitted or received on user logical channel. The FLOW is controlled in each user logical channel, so that by setting FLOW = 0 and returning data, a mating is made to interrupt transmission of data temporarily. Further, by setting FLOW = 1 and then returning data when the reception buffer is empty, the mating is made to restart transmission of data. Although the setting of this FLOW field is executed by the link control layer, real-time data flow control is not guaranteed. The real-time data flow control is all carried out by the base band layer using the FLOW field in the packet header. Because data in the control packet is all processed by the link control layer, it is not transferred to the logical link control layer. Therefore, the control packet is not affected by the flow control by this FLOW and its value is always set to 1.

5-bit or 9-bit LENGTH is a field indicating the data length of a payload body in the unit of byte. This is 5-bit field in case of a single slot packet and 9-bit field in case of a multi-slot packet.

UNDEFINED exists in only the payload header of the multi-slot packet and is currently an undefined field, which is always set to 0.

Data of a length specified by LENGTH of the payload header is accommodated in the payload body. Because the payload of data packet is constructed of only a payload body in SCO link communication, there is no specification of the data length by LENGTH. If the DV packet is used, the data length of that data portion is indicated.

The CRC is a 16-bit field indicating an error detection code and a detection code for detecting whether or not there is any error in the payload header and payload. This error detection code is generated using a generating polynomial of g(D) = D¹⁶ + D¹² + D⁵ + 1. An initial value to be set in a 16-bit shift register upon its generation is set up to a 16-bit value obtained by adding 8-bit zeroes to 8 bits of the UAP in an address, which has been already described. The address for use here is the same as the address for use in generating the access code like the HEC.

Next, the packet type will be described.

The TYPE field specifies a packet type as described about the packet header. If speaking about this packet type to be set up here, there are a common packet used in the SCO link and ACL link in common and an inherent packet of the SCO link or ACL link.

First, the common packet will be described. The common packet includes NULL packet, POLL packet, FHS packet, DM1 packet, IQ packet and ID packet.

The NULL packet is a packet comprised of an access code and a packet header, having no payload. The length of the packet is fixed to 126 bits. This packet is a packet for transmitting/receiving the status of a communication link and controls packet reception confirmation (ARQN) and flow control (FLOW). A confirmative response of a packet corresponding to the reception of this NULL packet is not required.

The POLL packet is a packet comprised of an access code and a packet header like the NULL packet and fixed to 126 bits so as to control the status of communication link. In case of this POLL packet, when the POLL packet is received, it is necessary to transmit a response about confirmation of the packet even if there is no data to be transmitted, different from the NULL packet.

The FHS packet is an important control packet for achieving synchronism in the pico-net and transmitted when a clock and an address which are independent parameters for establishing synchronism between the mater and the slave are exchanged. FIG. 26 is a diagram showing an example of the structure of the payload of the FHS packet. The payload of the FHS packet is comprised of 11 fields and composed of 160 bits by adding a 16-bit error detection code to 144 bits of this 11 fields. The 11 fields composing the FHS packet will be described.

The 34-bit parity bit is a field including a parity to a sync word in an access code set up by the FHS packet.

The 24-bit LAP is low level 24 bits of an address of a terminal for transmitting the FHS packet. 2 bits following the LAP is an undefined field and set to 0.

The 2-bit SR is a 2-bit field, which upon call, specifies the frequency of repetition for the master to transmit an ID packet string and the period of scanning for the slave to scan the ID packet string from the master.

The 2-bit SP is a field, which upon inquiry, specifies a time for the slave to execute independent call scanning after the slave receives an IQ packet from the master and transmit the FHS packet to the master.

The 8-bit UAP is high-level 8 bits of an address of a terminal for transmitting the FHS packet.

The 16-bit NAP is 16 bits except LAP and UAP within an address of a terminal for transmitting the FHS packet.

The class of a 24-bit device is a field indicating the kind of the terminal.

The 3-bit AM ADDR is a 3-bit field for the master to identify the slave. In the call processing, the master specifies a slave identifier for use in the pico-net through the FHS packet which the master transmits to the slave. In the FHS packet which the slave transmits as a response of IQ packet from the master, AM ADDR is meaningless and needs to be set to 0.

26-bit CLK 27-2 is a field indicating high level 26 bits in a clock possessed by the terminal. This clock has a clock accuracy of 1.25 µseconds and when transmitting the FHS packet, the clock value at that time needs to be set.

3-bit page scan mode is a field for specifying a mode of call scan of default supported by a terminal which transmits the FHS packet.

Next, the DM1 packet will be described. If the DM1 packet is being transmitted or received through the SCO link, it always functions as a control packet. On the other hand, if it is transmitted or received through the ACL link, it not only functions as a control packet but also is used for transmission/reception of data packet.

If it is transmitted as a common packet through the SCO link or ACL link, it is defined as a control packet of the link control layer. When the DM1 packet is transmitted or received through the ACL link, which it is user packet or control packet cannot be distinguished only if a field (TYPE) for specifying a packet type is seen. Thus, by setting logical channel type field of the payload header to L_CH = 11, it is specified that the DM1 packet is a control packet for the link control layer. In case of data packet, L_CH = 01 or L_CH = 10 is set up by fragmentation of original user data.

The IQ packet is a packet which the master broadcasts corresponding to inquiry and composed of only inquiry access codes.

The ID packet is a packet which upon call, the master transmits by specifying a specific slave and composed of only call access codes. The IQ packet and ID packet are packets not defined on the type field of the packet header.

Next, SCO packet, which is data packet transmitted or received on the SCO link, will be described. The SCO packet is comprised of four kinds, HVI packet, HV2 packet, HV3 packet and DV packet.

The payload of the HV1 packet is composed of only a payload body, which accommodates user data of 10 bytes.

Because basically the SCO packet is not resent, this 10 bytes do not contain any error detection code. Then, the data is subjected to error correction coding at 1/3 rate, so that finally it has a payload length of 240 bits. The payload of the HV2 packet is composed of only a payload body and accommodates 20-byte data. This 20 bytes do not include any error detection code. Then, the data is subjected to error correction coding at 2/3 rate, so that finally, it has a payload length of 240 bits.

The payload of the HV3 packet is composed of only a payload body and accommodates 30-byte data. This 30 bytes do not contain any error detection code. This 30 bytes is not subjected to error correction coding.

The DV packet is comprised of an audio part of a fixed length of 10 bytes and a variable length data part of up to 9 bytes. Although any error correction code is not contained in 10 bytes of the audio part, a 2-byte error detection code for a part of 10 bytes max. expanded from 1-byte payload header is attached to the data part.

The ACL packet transmitted/received on the ACL link includes DM1 packet, DH1 packet, DM3 packet, DH3 packet, DH5 packet, DH5 packet and AUX1 packet.

The payload of the DM1 packet is comprised of 1-byte payload header, a variable length payload body of 17 bytes max. and an error detection code.

The configuration of the DH1 packet is the same as the DH1. However, the payload is not subjected to error correction coding. Therefore, it is capable of transmitting or receiving a variable length data of up to 27 bytes.

The payload of the DM3 packet is comprised of a 2-byte payload header, a variable length payload body of up to 121 bytes and an error correction code. The payload of the DM3 packet is subjected to error correction coding at 2/3 rate.

The configuration of the DH3 packet is the same as that of the DM3 packet. However, the payload is not subjected to error correction coding. Therefore, it is capable of transmitting or receiving a variable length data of up to 183 bytes.

The payload of the DM5 packet is comprised of 2-byte payload header, a variable length payload body of up to 224 bytes and a 2-byte error correction code.

The configuration of the DH5 packet is the same as that of the DM5 packet. However, the payload is not subjected to error correction coding. Therefore, it is capable of transmitting or receiving a variable length data of up to 339 bytes.

The AUX packet is the same as the DH1 packet in case where no 2-byte error detection code is contained. That is, the AUX1 packet is not resent. The payload body is increased by 2 bytes, so that it is capable of transmitting or receiving a variable length data of up to 29 bytes.

Next, transition status based on bluetooth will be described. The transition status of this method is composed of three phases relating to transmission and low consumption power mode relating to power consumption at a terminal. The three phases relating to transmission is divided to waiting phase, synchronism establishing phase and transmission phase. Further, the low consumption power mode is divided to three types, park mode, hold mode and sniff mode. FIG. 27 is a diagram showing a status transition and there are transitions indicated with arrows.

The waiting phase (S11) is composed of a processing condition and a phase in which any packet is not transmitted or received. Just after a terminal is powered on or when communication link is cut out, the terminal is kept in the waiting phase. In this waiting phase, the roles of the master and the slave are not different.

The synchronism establishing phase is composed of two kinds, inquiry (S12) and call (S13).

The inquiry is a first stage processing condition for establishing synchronism in the pico-net. A terminal intending to transmit for the first time is always transferred to inquiry after the waiting phase.

The call is a second stage processing condition for establishing synchronism in the pico-net. Although basically, that condition is attained from the inquiry, if the first stage processing for establishing synchronism in the pico-net with the inquiry condition is already completed, the call may be attained directly from the waiting phase.

In this inquiry, the roles of the master and the slave are clearly different. The master in this processing condition broadcasts IQ packets continuously irrespective of whether or not a slave exists nearby. If a slave in the inquiry condition exists nearby, the slave transmits the FHS packet to the master in order to notify its attribution each time when it receives the IQ packet. Through this FHS packet, the master is capable of knowing an address and a clock of the slave.

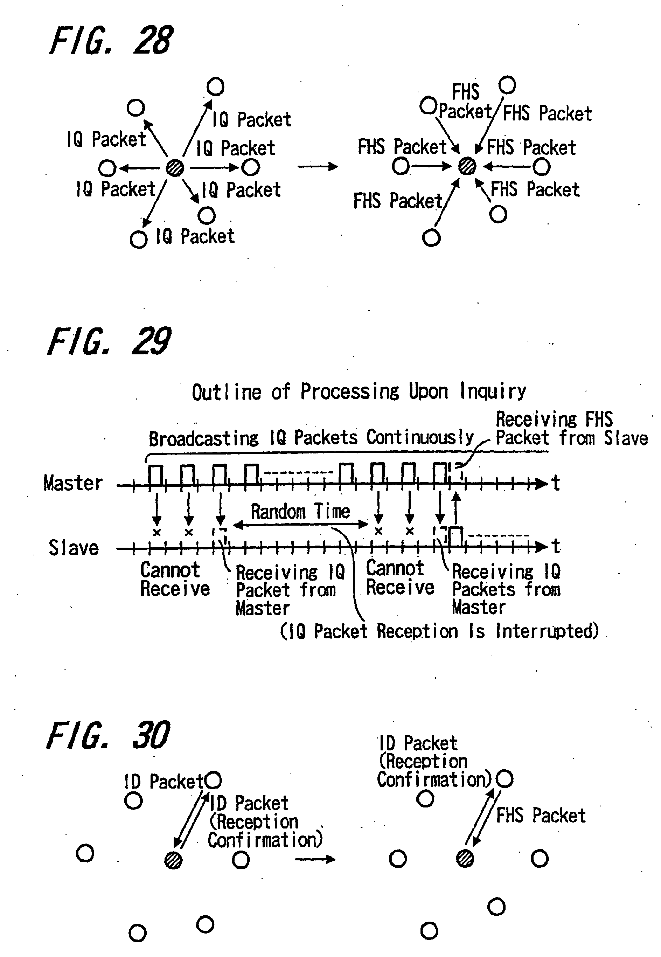

FIG. 28 is a diagram showing a processing which the master and slave in this inquiry condition carry out. If as shown on the left of FIG. 28, the master in the center transmits the IQ packet, a surrounding slave transmits the FHS packet to the master as shown on the right of FIG. 28. The master in the inquiry condition receives the FHS packet from unspecified plural slaves.

Here, a fact that plural slaves transmits the FHS packet to a specific IQ packet at the same time is a problem. If plural FHS packets are transmitted at the same time, a collision of the packets occurs so that the master cannot distinguish the transmitted FHS packets. According to the bluetooth, the random time is backed off when transmitting the FHS packet in order to avoid such a collision. That is, the slave does not transmit the FHS packet to the master with respect to the IQ packet received for the first time and after that, interrupts reception of the IQ packet while the random time is backed off. After that, the slave restarts reception of the IQ packet and next, just after the IQ packet is received, transmits the FHS packet to the master. If the slave receives the FHS packet, it interrupts the reception of the IQ packet again while the random time is backed off. After that, this action is repeated.

FIG. 29 is a diagram showing an outline of processing in the master and slave upon the inquiry. Because the master does not notify the slave that it can receives the FHS packet without any error, the slave in the inquiry condition remains in a state just after the FHS packet is transmitted. However, because the same IQ packet is broadcast repeatedly in a specified interval of time, the master receives plural FHS packets for each slave in the inquiry condition. That is, by continuing the inquiry in a specified interval of time, certainty of transmission/ reception of the FHS packet is intensified.

In case of the call, the roles of the master and slave are different. With this processing condition, the master selects a slave scheduled to communicate with based on information of the FHS packet transmitted/received in the inquiry and transmits the ID packet to that slave. If the master confirms the reception of the ID packet, it transmits the FHS packet to that slave. Consequently, the slave can know the address and clock of the master.

As an access code to the ID packet and FHS packet to be transmitted/received here, the call access code is used.

FIG. 30 shows an outline of processing operation carried out by the master and slave in the call condition. If the master located in the center transmits the ID packet to the slave as shown on the left of FIG. 30, the slave notifies of reception confirmation. Further, if the master transmits the FHS packet to the slave as shown on the right of FIG. 30, the slave notifies of reception confirmation.

Different from a processing to unspecified plural slaves upon inquiry, processing is exchanged between a specified slave and master upon inquiry. Because transmission and reception of the packet can be carried out one to one, the master and slave can execute processing while confirming the transmission and reception.

After receiving the ID packet from the master, the slave transmits the same ID to the master so as to notify of reception confirmation. Next, the master transmits the FHS packet to the slave so as to notify the slave of its own address and clock. If the slave receives this FHS packet without any error, it transmits the ID packet to the master so as to confirm the reception. At this time, information about the address and clock necessary for synchronism in the pico-net is exchanged between the master and the slave together with the inquiry processing.

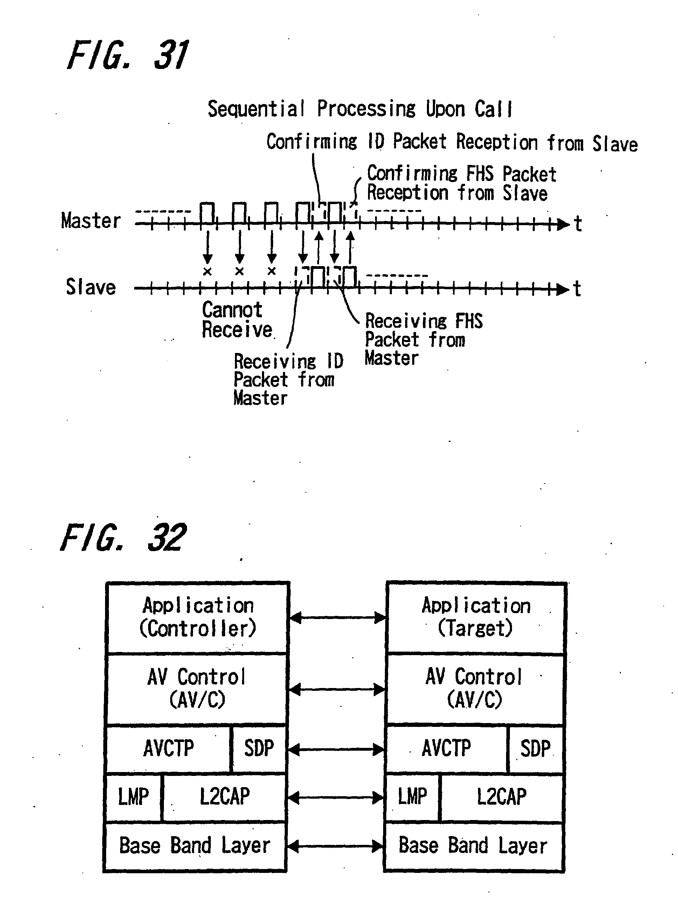

FIG. 31 is a diagram showing an example of processing between the master and the slave upon call.

The communication connection phase shown in the status transition diagram of FIG. 28 includes connection (S14) and data transfer (S15). Because in this communication connection phase, the master is synchronous with the slave in the pico-net after synchronism establishing phase, this allows actual communication to be executed. In the connection status, transmission/reception of data packet is not carried out. Those transmitted/received at this time are restricted to control packet for setting communication link, control packet relating to security and control packet relating to low consumption power mode.

On the other hand, in data transfer status, transmission/reception of data packet is permitted. If the status is changed to connection for the first time after the synchronism establishing phase, basically it cannot be changed to data transmission unless processings for connection certification and coding between the master and slave are completed. The roles of the master and slave on connection are different depending on the content of control package to be controlled there.

Transmission and reception of data packet on data transfer are carried out according to rules of the master, slave and time slot. If a terminal relating to data transmission cuts out communication or a controller in a terminal is reset in terms of hardware, the terminal is turned from data transmission state to waiting state.

The low consumption power mode refers to a mode for providing low consumption power status of a terminal which is turned from connection state. This low consumption power mode is divided to three types, park mode (S16), hold mode (S17) and sniff mode (S18).

The park mode is a mode particular to the slave and a low consumption power mode which maintains synchronism in the pico-net established by connection.

The hold mode is a low consumption power mode which both the master and the slave can turn to and is a mode which maintains synchronism in the pico-net established by connection and in case of the slave, holds a slave identifier given by the master.

The sniff mode is a low consumption power mode particular to the slave and is a mode in which the slave maintains synchronism in the pico-net established by connection like in case of the hold mode and holds a slave identifier given by the master.

Under the bluetooth, it is possible to switch between a master and a specified slave in the pico-net.

Processing about security to be carried out with the communication connection phase being connected is largely divided to certification and coding. Certification processing refers to determining whether or not connection between itself and a specified mating is permitted. Coding processing refers to protecting data which is being transmitted from being tapped by a third party.

The security of the bluetooth is controlled under a concept of link key. The link key refers to a parameter for controlling one-to-one security between specified two terminals. This link key must not be disclosed to the third party.

As this link key, an initialization key for use between terminal which try to connect each other for the first time is used. If a link key is set up in the data base as parameter by connecting previously, that set up link key is used. The initialization key is generated using a PIN code from a higher level application and internally generated data.

General processing based on the bluetooth norm has been described up to here. In the short-distance wireless communication of this example, a command for controlling such an electronic device as audio device and video device (these devices are generally called AV devices) and a response are transmitted.

FIG. 32 is a diagram showing configuration of transmission for transmitting this command and response with a hierarchical structure. A terminal on command transmission side is called controller while a terminal which receives that command and sends back a response to the command transmitter is called target. The relation between this controller and target is other concept than the master and slave relation described above, necessary for carrying out communication connection control and basically, either may function as a terminal of the master or slave.

A layer for processing L2CAP packet for transmitting protocol data for control exists on the base band layer and AVCTP (Audio/Video Control Transport Protocol) protocol is prepared further thereon. A protocol called AV/C command is prepared on that protocol in order to control the AV device.

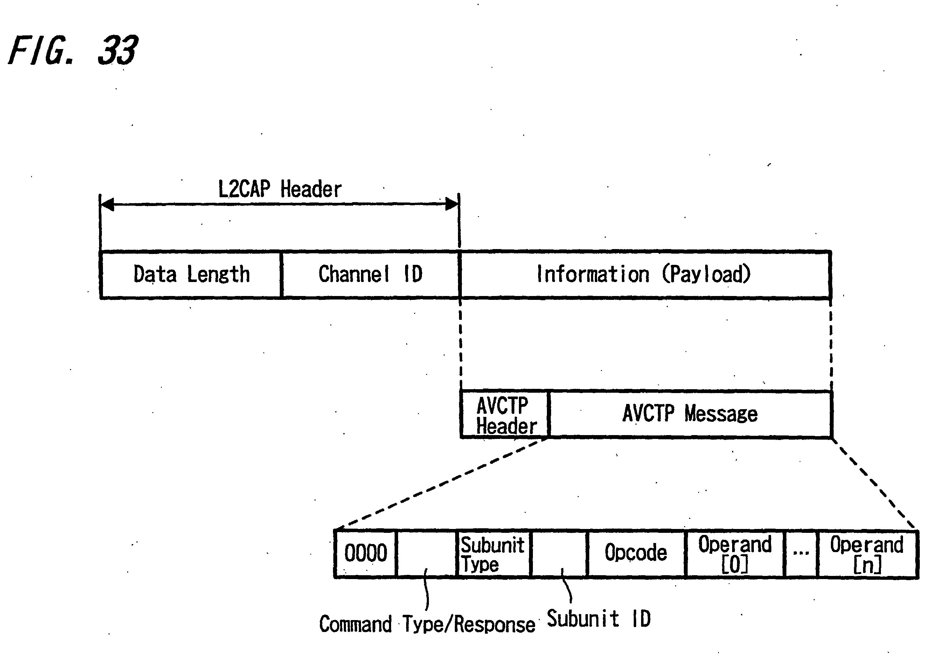

FIG. 33 is an example of the data structure of the L2CAP packet for transmitting data of that protocol. A header is attached to a heading portion of a payload section of this packet (portion marked with L2CAP Header), indicating data length (length) and channel ID. A subsequent section is actual information (information).

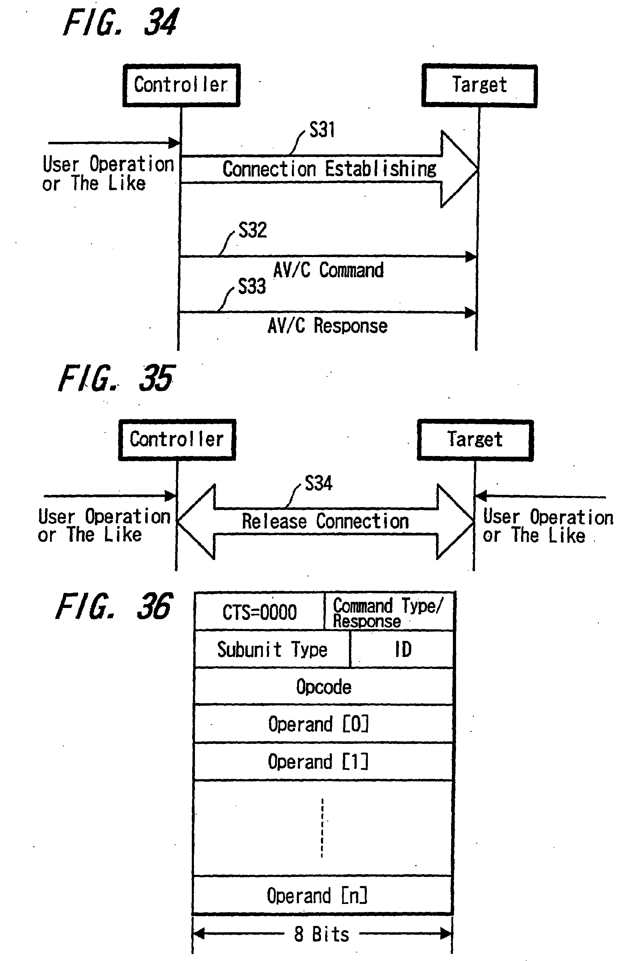

AVCTP header and AVCTV message are disposed in the information section. The AVCTP message data comprises "0000" data (4 bits) indicating AV/C data, command/response data (4 bits) indicating a command and a response, data (5 bits) indicating subunit type, data (3 bits) indicating subunit ID, opcode (opcode) data (8 bits) specifying a function and operands which are data attached to the functions (operand : 8 bits), operand [0], operand [1], ....operand [n] (n is an arbitrary integer) . The data structure of the AVCTP shown in FIG. 34 applies a data structure specified as AV/C command set which is a standard for transmitting device control data on a network connected through a cable-based bus line.

FIG. 34 is a diagram showing a condition in which a command and a response are transmitted by wireless between the controller and the target. If there is any user at the terminal of the controller side so that the necessity of transmitting a command to a target device occurs, the controller establishes a connection with the target (step S31) and transmits the AV/C command from the controller to the target through the established connection (step S32). The target receiving this command transmits a response to that command to the controller (step S33). Then, a processing corresponding to the command is executed as required. In case of a command for confirming the status of the target, a required data is sent back to the controller as a response.

If a processing for removing the connection is executed by user operation on the controller side or user operation on the target side as shown in FIG. 35, release connection processing for removing the connection set up to transmit the command or response is executed (step S34).

Next, the structure of the AV/C command set (that is, AVCTP data) for use in the system of this example will be described with reference to FIGS. 36-46. FIG. 36 indicates the data structure of a section to be transmitted as the AV/C command (that is, AVCTP data in case of this example) in the unit of 8 bits. The AV/C command set is a command set to control an AV device and CTS (command set ID) is "0000". The AV/C command frame and response frame are exchanged. A response to a command is sent for example, within a specified period. However, in some case, a temporary response is sent within the specified period and then a formal response is sent after some extent of interval.

The CTS indicates an ID of the command set and under the AV/C command set, CTS = "0000". When the packet is a command, the field of c type/response (ctype/response) indicates a function class of the command, and when the packet is response, it indicates a command processing result. The command is largely defined in four types, namely, (1) command (CONTROL) for controlling the function from outside, (2) command (STATUS) for inquiring about the state from outside, (3) command (GENERAL INQUIRY (presence or absence of support of opcode)) for inquiring about presence or absence of support of control command from outside, (4) command (NOTIFY) for requesting to notify outside of a change of the state.

The response is sent back depending on the kind of the command. The responses to the control command are NOT IMPLEMENTED (not implemented), ACCEPTED (accepted), REJECTED (rejected) and (INTERIM)(interim). The responses to the STATUS command are NOT IMPLEMENTED, REJECTED, IN TRANSITION (in transition), and STABLE (stable). The responses to commands (GENERAL INQUIRY and SPECIFIC INQUIRY) asking from the outside wheter or not there is any support for a command are IMPLEMENTED (implemented) and NOT IMPLEMENTED. The responses to a command demanding that a change of state be known to the outside (NOTIFY) are NOT IMPLEMENTED, REJECTED, INTERIM and CHANGED (changed).

The subunit type (subunit type) is installed to specify the function of the unit, for example, tape recorder/player, tuner and the like are allocated. The subunit is allocated with BBS (bulletin board subunit), a subunit for publicizing information to other devices in addition to the function for corresponding with devices. In order to determine if plural subunits of the same kind exist, a subunit ID (subunit id) is employed as a determination number for addressing. Opcode which is a operation code indicates a command and operand indicates a parameter of command. There are prepared fields (additional operands) which are added depencing on necessity. 0 data and the like are added depending on necessity.

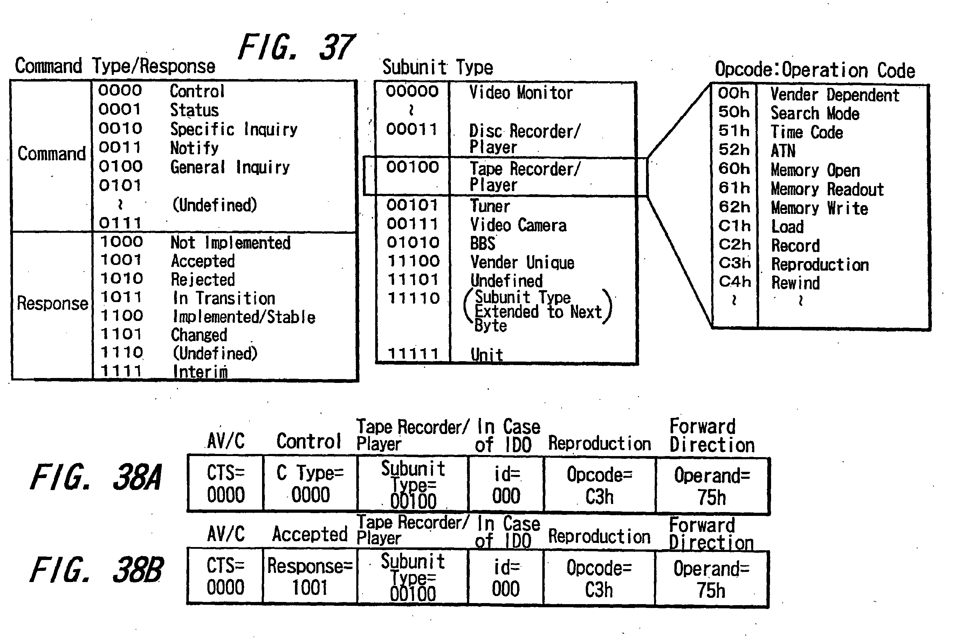

FIG. 37 shows a concrete example of the AV/C command. The left side of FIG. 37 indicates a concrete example of command type/response. An upper portion in the table indicates commands and a lower portion indicate responses. CONTROL is allocated to "0000", STATUS is allocated to "0001", SPECIFIC INQUIRY is allocated to "0010", NOTIFY is allocated to "0011", and GENERAL INQUIRY is allocated to "0100". "0101-0111" is reserved for future specification. NOT INPLEMENTED is allocated to "1000", ACCEPTED is allocated to "1001", REJECTED is allocated to "1010", IN TRANSITION is allocated to "1011", IMPLEMENTED/STABLE is allocated to "1100" and CHNGED is allocated to "1101" and INTERIM is allocated to "1111". "1110" is reserved for future specification.

The middle of FIG. 37 shows a concrete example of the subunit type. Video Monitor is allocated to "00000", Disk recorder/Player is allocated to "00011", Tape recorder/Player is allocated to "00100", Tuner is allocated to "00101", Video Camera is allocated to "00111", Subunit to be used as a bulletin board called BBS (Bulletin Board Subunit) is allocated to " 01010", Subunit type uniqe to a manufacturer (Vendor unique) is allocated to "11100" and specified Subunit type extended to next byte is allocated to "11110". Although unit is allocated to "11111", this is used for case for sending to just a unit, for example, power ON/OFF.

The right side of FIG. 37 shows a concrete example of opcode. opcode table exists for each subunit type and here, the subunit type indicates opcode in case where the subunit type is Tape recorder/Player. Operand is defined for each opcode. Here, a value unique to a manufacturer (VENDOR-DEPENDENT) is allocated to "00h", SEACH MODE is allocated to "50h", TIMECODE is allocated to "51h", ATN is allocated to "52h", MEMORY OPEN is allocated to "60h", READ MEMORY is allocated to "61h", WRITE MEMORY is allocated to "62h", LOAD is allocated to "C1h", RECORD is allocated to "C2h", PLAY is allocated to "C3h" and WIND is allocated to "C4h".

FIG. 38 shows a concrete example of the AV/C command and response. For example, if a reproduction instruction is dispatched to a reproducing appliance which serves for a target (consumer), the controller sends a command shown in FIG. 38(A) to the target. Because this command uses the AV/C command set, it comes that CTS = "0000". Because ctype uses a command (CONTROL) for controlling the unit from outside, it comes that ctype = "0000" (see FIG. 37). Because the subunit type is Tape recorder/Player, it comes that subunit type = "00100" (see FIG. 37). Because id indicates case of ID0, it comes that id = 000. opcode is "C3h" meaning reproduction (see FIG. 37). operand is "75h" meaning FORWARD. Then, if reproduction is carried out, the target sends back a response shown in FIG. 38B to the controller. Because accepted meaning reception enters into response, response = "1001" (see FIG. 38). Because others are the same as FIG. 38A excluding response, a description thereof is omitted.

By transmitting such specified AVDCP protocol data with the configuration shown in FIG. 33 according to Bluetooth method by radio, control of a mating unit and the like are enabled.

In this example, a case where a panel subunit is provided as a unit controlled with the AVDCP protocol data will be described. As described above, in the unit controlled according to the AVDCP protocol, each function portion is called subunit. As one of the subunits, there is a panel subunit. This panel subunit displays a panel for GUI (graphic user interface) about actions which can be carried out on the controlled unit by means of the control unit such as a remote control unit and if a key operation corresponding to a display on that panel occurs, the function displayed on the panel instructed by the key is executed. If the control is carried out using this panel unit, that control is executed using, for example, pass-through command. This pass-through command will be described later.

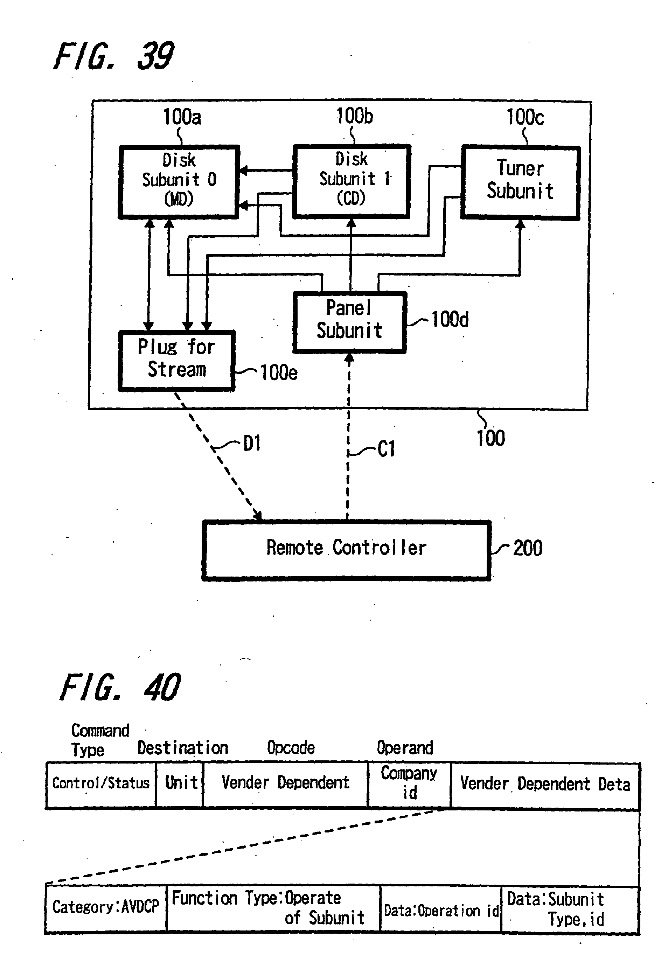

An example of the audio recording/reproducing apparatus 100 shown in FIG. 2 will be described with reference to FIG. 39. As subunits, this audio recording/reproducing apparatus 100 comprises a disc subunit 100a which is a recording/reproducing portion for MD (mini disc) which executes recording and reproduction of audio data into/from a disc, a CD (compact disc) reproducing portion 100b for executing reproduction of audio data from the disc, a tuner subunit 100c for receiving radio broadcasting and a panel subunit 100d for executing operations of the respective subunits 100a, 100b, 100c. The disc subunits 100a, 100b are provided with ID0, ID1 as subunit ID so that they can be identified. The panel subunit 100d is so constructed employing the CPU 110 shown in FIG. 2 and part of peripheral memory.

In the meantime, the CPU 110 is used as control means for the subunits 100a, 100b, 100c.

With such a structure, the remote control unit 200 sends control command C1 to the panel subunit 100d so as to remote control the audio appliance 100. When outputting stream data (audio data or the like) to outside from the respective subunits 100a, 100b, 100c by radio, it is transmitted directly from a stream plug 100e as data D1.

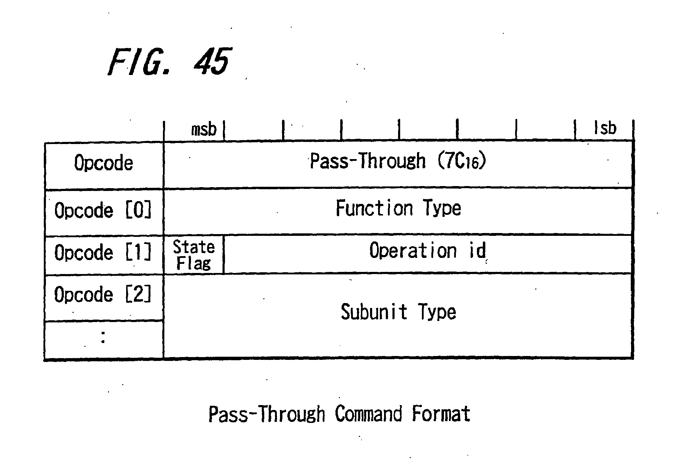

FIG. 45 is a diagram showing the configuration of pass through (PASSTHROUGH) command to be transmitted to the panel subunit. The section of opcode is provided with a code (7C₁₆) indicating pass through command. Function type data is disposed in the section of operand[0]. In the section of operand[1], state bit is disposed at a head bit and operation ID is disposed in remaining 7 bits. When this state flag is posted (when a data exists), it is indicated that it is a command indicating a function block to be controlled and 7-bit operation ID is neglected. When no state flag is posted (when 0 data exists), it is indicated that the operation ID is valid for the remaining 7 bits. Subunit type data is disposed in a section following the operand[2]. In the meantime, numerals expressed by attaching (₁₆) are hexadecimal numbers (indicated by 0, 1, ... 9, A, B, ... F) indicated with 4-bit data.

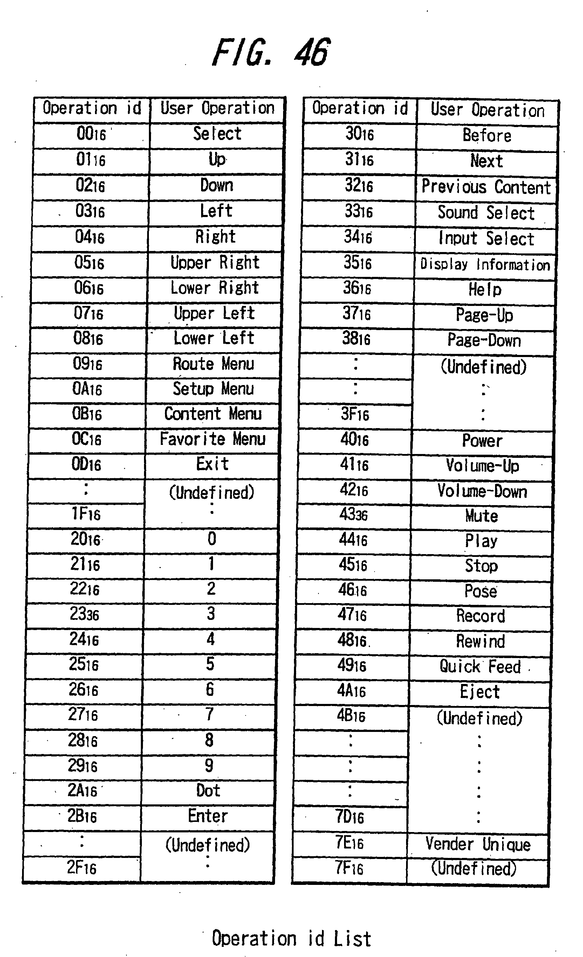

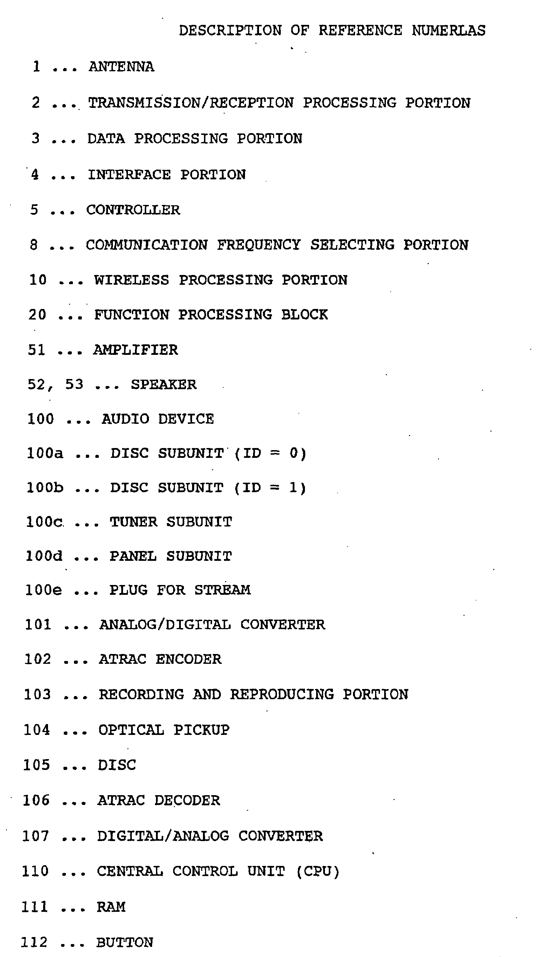

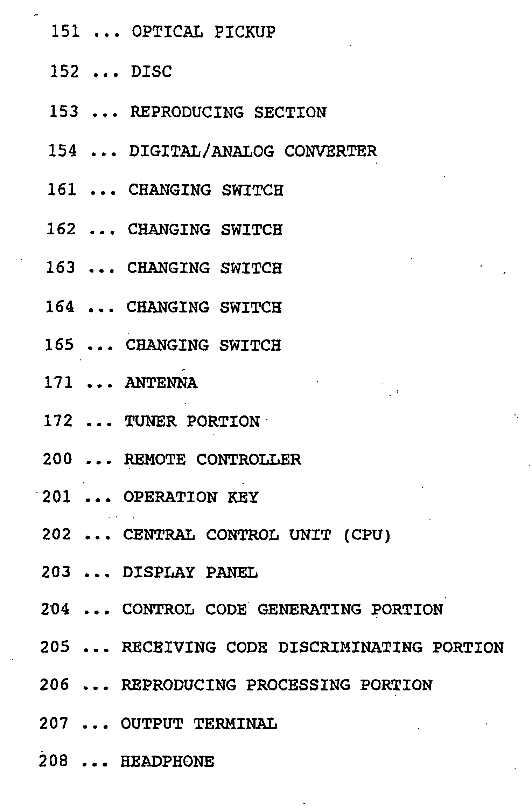

As an operation ID disposed in the section of operand[1], various operations are allocated to respective code values as shown in FIG. 46, for example. For example, codes for instructing directions of up and down on the GUI screen and selection thereof, codes for instructing for selection of a menu screen, and codes for directly instructing an operation of audio appliance or video appliance such as reproduction, stop, recording, rapid feed, rewind are allocated.

In this example, by transmitting the remote control unit 200 a specified command to the audio appliance 100, it is possible to preliminarily carry out instruction to the subunit provided in this audio appliance 100.

FIG. 40 shows an example of the configuration of command to be sent from the remote control unit 200 for this purpose. Upper data shown in FIG. 40 is disposed in each of the data sections shown in FIG. 33. Its command type is [CONTROL] for controlling the state or [STATUS] for inquiry thereof. A destination of this command is for all sections of an appropriate unit and therefore, this command is sent to the unit. In the section of opcode, vendor dependent value indicating that it is a code particular to manufacturer is provided. In the section of operand[0], a company ID for identifying a manufacturer is disposed. In a section following operand [1], data for investigating which command is capable of making control is disposed.

As for data in the section following operand[1], as shown at the lower step of FIG. 40, it is indicated that the first category code is AVDCP protocol code and next, data about function type to be inquired is disposed. Here, data for specifying the subunit is disposed. Next, the operation ID is disposed. Finally, data such as the subunit ID is disposed.

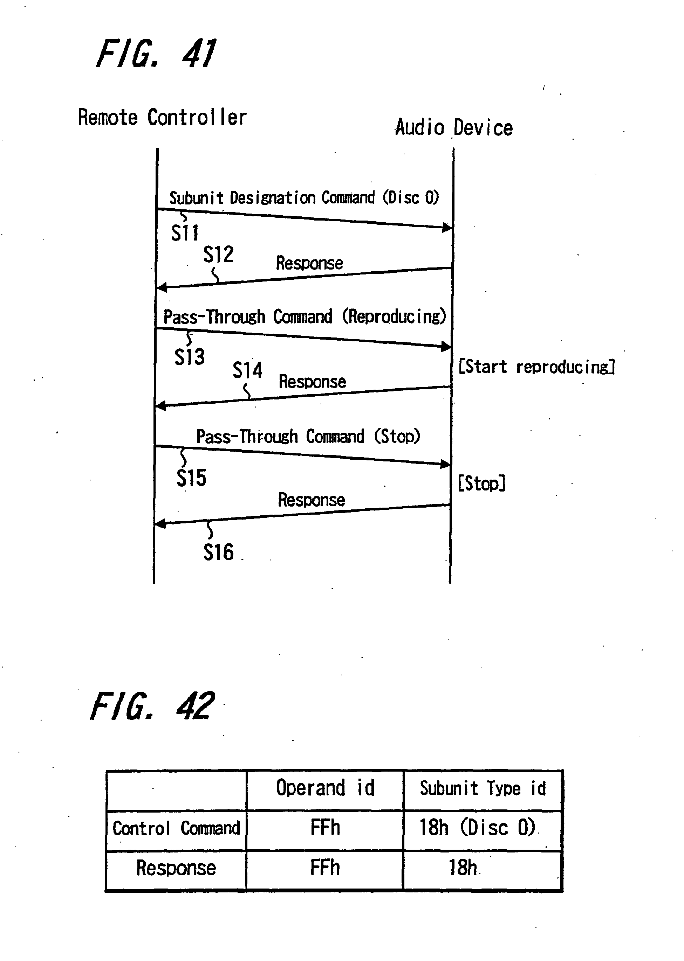

FIG. 41 shows a processing for registering a subunit for which a command to be transmitted to a mating appliance is to be executed as [CONTROL] for controlling the state as a command type of this command. First of all, the remote control unit 200 sends a subunit specification command to the audio appliance 100. At this time, as the subunit type, data for specifying disc subunit of the ID0 is attached (step S11). At this time, a state flag (see FIG. 45) is posted. The audio appliance 100 sends back a response to this command to the remote control unit 200 (step S12). Then, a subunit specified at this time is stored (registered) in a panel subunit within the audio appliance 100.

FIG. 42 is a diagram showing an example of data structure about operation IDs of the command and response at this time and subunit ID. Under the control command, the operation ID is invalid and its maximum value is FF. Then, as a subunit ID, ID for specifying disc subunit 0 is attached. As a response, operation ID and subunit ID are sent back as they are.

When a command for instructing reproduction is sent from the remote control unit 200 with pass through command (step S13), the panel subunit sends reproduction command to a disc subunit (disc subunit of ID0) specified by a command of step S11 so as to start reproduction in an appropriate disc subunit and send back a response to that command (step S14).

Further, when a command for instructing stop of reproduction from the remote control unit 200 with pass through command is sent (step S15), the panel subunit sends stop command to a disc subunit (disc subunit of ID0) specified by a command of step S11 so as to stop reproduction in an appropriate disc subunit and send back a response to that command (step S16).

If a subunit for control is specified once, it is not necessary to instruct a subunit each time for commands to be transmitted after that. Meanwhile, a column in which the subunit in data is to be specified only has to be a maximum value (FF) which is invalid data. The specification of this subunit may be released by sending data for releasing the specification of the subunit or updated if another subunit specification exists.

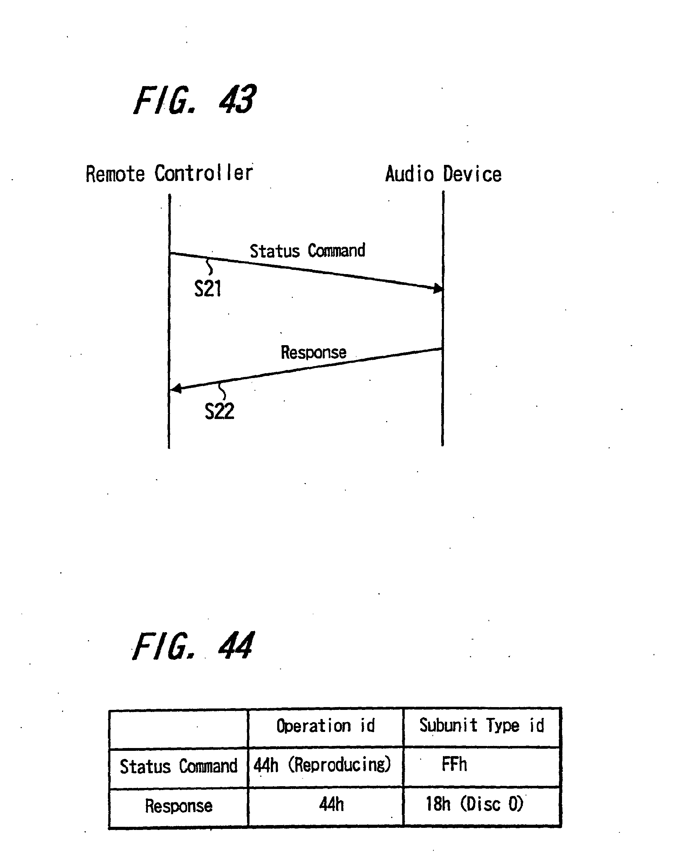

Additionally, the registration condition of the subunit of that appliance can be inquired by sending a command from the remote control unit to the audio appliance as not the control command, but as an inquiry [STATUS] command. FIG. 43 shows an example of this case, in which the remote control unit 200 sends a command of [STATUS] to the audio appliance 100 in order to verify the specification condition of the subunit (step S21). At this time, the status flag (see FIG. 45) is set to 1. With a response to this command, data about the subunit ID registered to be controlled by the audio appliance 100 is attached (step S22).

FIG. 44 is a diagram showing an example of data configuration about operation ID of a command and response at this time and subunit ID. Under the status command, a code about the function to be inquired with the operation ID is attached. Because in this example, a subunit which executes an instruction for reproduction is inquired, a code (44) corresponding to reproduction is attached. Then, the subunit ID is set to a maximum value (FF).

In a response to this command, the operation ID is kept as it is and the registered subunit ID is attached to the subunit ID so that reproducing action is carried out when an instruction for reproduction is given. In this example, the subunit ID is sent back with the ID of disc subunit 0.

In case where a subunit is registered such that it can be controlled without specifying the subunit, the registration condition can be recognized simply by sending a response in this way.

In the embodiments described up to here, a case of transmitting by radio according to the so-called Bluetooth standard has been described. In case for transmitting control data or the like through another radio transmission network also, of course, the processing by the present invention may be applied.

Although an example of the audio appliance has been described about the subunit provided on the appliance, the present invention may be applied to another appliance such as a video appliance.

Further, the present invention may be applied to a transmission network in which respective appliances are connected in series through wire bus line. For example, the present invention may be applied to bus line called IEEE (The Institute of Electrical and Electronics Engineers) 1394 type. In this case, the above described respective commands are executed in asynchronous transmission and if transmission of stream data with that command is instructed, they can be executed in isochronous transmission.

As explained above, according to the present invention, by specifying a function block which is an object for control by transmission of a first command, it is not necessary to specify any function block which is the object for control when transmitting a second command after that. Thus, the command configuration can be simplified, so that it is possible to control one appliance from the other appliance favorably with such a simple structure.

In this case, because the first command is instructed by posting a predetermined flag, a function block which is an object for control can be specified.

Further, because radio transmission network is employed as transmission network and the command is transmitted through a first channel secured within that radio transmission network, the object for control can be specified easily by radio transmission.

Further, because the transmission network is a network in which appliances are connected through a predetermined bus line and the command is executed in asynchronous communication on the bus line, the object for control can be specified easily by data transmission through the bus line.

According to the present invention, the function block which is the object for control on the side of controlled appliances can be recognized easily from another appliance, the function block which is the object for control can be specified and recognized easily so as to carry out control.

### INDUSTRIAL APPLICABILITY .

As described so far, according to the data transmission method, the data transmission system and the data transmitting apparatus of the present invention, if a wireless transmission network for carrying out wireless transmission among, for example, audio devices or video devices is constructed and the other device is remotely controlled from a specified device in this network, a control target functional block is designated by the transmission of the first command to make it unnecessary to designate the control target functional block when a later command is transmitted, thereby making it possible to simplify structure and to control the other device from one device with simple structure. In addition, it is possible to easily check the control target function block of the to-be-controlled device from the other device and to easily conduct checking if the control target functional block is specified in advance and controlled.

## Claims

1. A data transmission method for transmitting a command of a predetermined format between one appliance and another appliance, which are capable of transmitting data bidirectionally over a predetermined transmission network, **characterized in that**
when said one appliance sends a first command for instructing a function block which is an object for control to said other appliance in said transmission network, the function block which is an object for control by a second command transmitted from said one appliance is determined to be a function block instructed by said first command.

2. The data transmission method according to claim 1 **characterized in that** said first command is instructed by posting a predetermined flag.

3. The data transmission method according to claim 1 **characterized in that**
said transmission network is a radio transmission network and said command is transmitted over the first channel secured within the radio transmission network.

4. The data transmission method according to claim 3 **characterized in that**
when transmission of stream data by said second command is instructed, transmission of the stream data is carried out through a second channel secured within said radio transmission network.

5. The data transmission method according to claim 1 **characterized in that** said transmission network is a network in which appliances are connected through a predetermined bus line and said command is executed by asynchronous communication on said bus line.

6. The data transmission method according to claim 5 **characterized in that**
when transmission of stream data is instructed by said second command, transmission of the stream data is carried out by isochronous communication on said bus line.

7. A data transmission method for transmitting a command of a predetermined format and a response thereto between one appliance and another appliance, capable of transmitting data bidirectionally over a predetermined radio transmission network, **characterized in that**
when said one appliance transmits a first command for recognizing a function block which is an object for control to said other appliance in said transmission network, a function block corresponding to said other appliance is sent back as a response to the first command.

8. The data transmission method according to claim 7 **characterized in that** said first command is instructed by posting a predetermined flag.

9. A data transmission system for transmitting a command of a predetermined format between a first appliance and a second appliance capable of transmitting data bidirectionally over a predetermined transmission network, **characterized in that**
said first appliance comprises
a first communication means for communicating with said second appliance over said network and
a first control means for generating a first command for instructing a function block which is an object for control within said second appliance and a second command for instructing execution of a predetermined function for the function block instructed by the first command, and
said second appliance comprises
a second communication means for communicating with said first appliance over said network and
a second control means for when said first command is received by said second communication means, memorizing a function block instructed with the command and when said second command is received, executing a function instructed by the second command for the memorized function block.

10. The data transmission system according to claim 9 **characterized in that**
said first control means creates the first command by posting a predetermined bit within the command.

11. A data transmission system for transmitting a command of a predetermined format and a response between a first appliance and a second appliance capable of transmitting data bidirectionally over a predetermined transmission network, **characterized in that**
said first appliance comprises
a first communication means for communicating with said second appliance through said network and
a first control means for generating a first command for recognizing a function block which is an object for control within said second appliance, and
said second appliance comprises
a second communication means for communicating with said first appliance through said network and
a second control means for when said first command is received by said second communication means, transmitting a function block which is an object for control from said second communication means as a response.

12. A data transmission apparatus connected to a predetermined network, comprising
a communication means for communicating with another appliance bidirectionally through said network and
a control means for generating a first command for instructing a function block which is an object for control within a predetermined appliance connected over said network and a second command for executing a predetermined function for a function block instructed by the first command.

13. The data transmission apparatus according to claim 12 **characterized in that** said control means creates the first command by posting a predetermined bit within the command.

14. A data transmission apparatus connected to a predetermined network, comprising
a communication means for communicating with another appliance bidirectionally through said network and
a control means for generating a first command for recognizing a function block which is an object for control within a predetermined appliance connected through said network and transmitting from said communication means.

15. The data transmission apparatus according to claim 14 **characterized in that**
said control means creates the first command by posting a predetermined bit within the command.

16. A data transmission apparatus connected to a predetermined network, **characterized by** comprising
a communication means for communicating with another appliance bidirectionally over the network and
a control means for, when said communication means receives a first command, memorizing a function block instructed by the command and when it receives a second command, executing a function instructed by the second command for the memorized function block.

17. The data transmission apparatus according to claim 16 **characterized in that**
said control means determines the first command by determining a predetermined bit within the command.

18. A data transmission apparatus connected to a predetermined network, **characterized by** comprising
a communication means for communicating with another appliance connected over said network bidirectionally and
a control means for, when it is determined that said communication means receives a command for recognizing a function block which is an object for control within a self appliance, transmitting a response having information indicating the set function block which is the object for control to a transmitting source of said command from said communication means.

19. The data transmission apparatus according to claim 18 **characterized in that**
said control means determines that it is a command for recognizing said function block by determining a predetermined bit within the command.

## Amended claims

### Amended claims under Art. 19.1 PCT

**1.** A data transmission method for transmitting a command of a predetermined format between one appliance and another appliance, which are capable of transmitting data bidirectionally over a predetermined transmission network, **characterized in that**
when said one appliance sends a first command for instructing a function block which is an object for control to said other appliance in said transmission network, the function block which is an object for control by a second command transmitted from said one appliance is determined to be a function block instructed by said first command.

**2.** The data transmission method according to claim 1 **characterized in that** said first command is instructed by posting a predetermined flag.

**3.** The data transmission method according to claim 1 **characterized in that**
said transmission network is a radio transmission network and said command is transmitted over the first channel secured within the radio transmission network.

**4.** The data transmission method according to claim 3 **characterized in that**
when transmission of stream data by said second command is instructed, transmission of the stream data is carried out through a second channel secured within said radio transmission network.

**5.** The data transmission method according to claim 1 **characterized in that** said transmission network is a network in which appliances are connected through a predetermined bus line and said command is executed by asynchronous communication on said bus line.

**6.** The data transmission method according to claim 5 **characterized in that**
when transmission of stream data is instructed by said second command, transmission of the stream data is carried out by isochronous communication on said bus line.

**7.** A data transmission method for transmitting a command of a predetermined format and a response thereto between one appliance and another appliance, capable of transmitting data bidirectionally over a predetermined radio transmission network, **characterized in that**
when said one appliance transmits a first command for recognizing a function block which is an object for control to said other appliance in said transmission network, a function block corresponding to said other appliance is sent back as a response to the first command.

**8.** The data transmission method according to claim 7 **characterized in that** said first command is instructed by posting a predetermined flag.

**9.** A data transmission system for transmitting a command of a predetermined format between a first appliance and a second appliance capable of transmitting data bidirectionally over a predetermined transmission network, **characterized in that**
said first appliance comprises
a first communication means for communicating with said second appliance over said network and
a first control means for generating a first command for instructing a function block which is an object for control within said second appliance and a second command for instructing execution of a predetermined function for the function block instructed by the first command, and
said second appliance comprises
a second communication means for communicating with said first appliance over said network and
a second control means for when said first command is received by said second communication means, memorizing a function block instructed with the command and when said second command is received, executing a function instructed by the second command for the memorized function block.

**10.** The data transmission system according to claim 9 **characterized in that**
said first control means creates the first command by
posting a predetermined bit within the command.

**11.** A data transmission system for transmitting a command of a predetermined format and a response between a first appliance and a second appliance capable of transmitting data bidirectionally over a predetermined transmission network, **characterized in that**
said first appliance comprises
a first communication means for communicating with said second appliance through said network and
a first control means for generating a first command for recognizing a function block which is an object for control within said second appliance, and
said second appliance comprises
a second communication means for communicating with said first appliance through said network and
a second control means for when said first command is received by said second communication means, transmitting a function block which is an object for control from said second communication means as a response.

**12.** A data transmission apparatus connected to a predetermined network, comprising
a communication means for communicating with another appliance bidirectionally through said network and
a control means for generating a first command for instructing a function block which is an object for control within a predetermined appliance connected over said network and a second command for executing a predetermined function for a function block instructed by the first command.

**13.** The data transmission apparatus according to claim 12 **characterized in that** said control means creates the first command by posting a predetermined bit within the command.

**14.** A data transmission apparatus connected to a predetermined network, comprising
a communication means for communicating with another appliance bidirectionally through said network and
a control means for generating a first command for recognizing a function block which is an object for control within a predetermined appliance connected through said network and transmitting from said communication means.

**15.** The data transmission apparatus according to claim 14 **characterized in that**
said control means creates the first command by posting a predetermined bit within the command.

**16.** A data transmission apparatus connected to a predetermined network, **characterized by** comprising
a communication means for communicating with another appliance bidirectionally over the network and
a control means for, when said communication means receives a first command, memorizing a function block instructed by the command and when it receives a second command, executing a function instructed by the second command for the memorized function block.

**17.** The data transmission apparatus according to claim 16 **characterized in that**
said control means determines the first command by determining a predetermined bit within the command.

**18.** A data transmission apparatus connected to a predetermined network, **characterized by** comprising
a communication means for communicating with another appliance connected over said network bidirectionally and
a control means for, when it is determined that said communication means receives a command for recognizing a function block which is an object for control within a self appliance, transmitting a response having information indicating the set function block which is the object for control to a transmitting source of said command from said communication means.

**19.** The data transmission apparatus according to claim 18 **characterized in that**
said control means determines that it is a command for recognizing said function block by determining a predetermined bit within the command.

**20.** (Added) The data transmission method as claimed in claim 1 wherein the first command is indicated in a pharmaceutical company dedicated data region.
